(19) Europäisches Patentamt
European Patent Office
Office européen des brevets

(11) EP 1 966 288 B1

(12) FASCICULE DE BREVET EUROPEEN

(45) Date de publication et mention de la délivrance du brevet:
**28.05.2014 Bulletin 2014/22**

(21) Numéro de dépôt: **06831150.5**

(22) Date de dépôt: **21.11.2006**

(51) Int Cl.:
***B01J 47/12*** (2006.01) ***B01D 67/00*** (2006.01)
***C08J 7/12*** (2006.01) ***H01G 11/56*** (2013.01)
***B01J 39/18*** (2006.01) ***C08J 3/24*** (2006.01)
***H01G 9/022*** (2006.01)

(86) Numéro de dépôt international:
**PCT/FR2006/002560**

(87) Numéro de publication internationale:
**WO 2007/060321 (31.05.2007 Gazette 2007/22)**

(54) **FILM DE POLYMERE RETICULE PORTANT DES GROUPEMENTS IONIQUES**

FILM AUS VERNETZTEM POLYMER MIT IONISCHEN GRUPPIERUNGEN

CROSSLINKED POLYMER FILM BEARING IONIC GROUPINGS

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **22.11.2005 FR 0511807**

(43) Date de publication de la demande:
**10.09.2008 Bulletin 2008/37**

(73) Titulaires:
- **Institut Polytechnique de Grenoble**
**38031 Grenoble Cedex (FR)**
Etats contractants désignés:
**FR**
- **Eras-Labo**
**38330 Saint Nazaire les Eymes (FR)**
Etats contractants désignés:
**FR**
- **Centre National de la Recherche Scientifique**
**75016 Paris (FR)**
Etats contractants désignés:
**FR**
- **Blue Solutions**
**29500 Ergué Gabéric (FR)**
Etats contractants désignés:
**FR**
- **SOLVAY SA**
**1120 Bruxelles (BE)**
Etats contractants désignés:
**AT BE BG CH CY CZ DE DK EE ES FI GB GR HU IE IS IT LI LT LU LV MC NL PL PT RO SE SI SK TR**

(72) Inventeurs:
- **SANCHEZ, Jean-Yves**
**F-38330 Saint Ismier (FR)**
- **IOJOIU, Cristina**
**F-38000 Grenoble (FR)**
- **MERCIER, Régis**
**F-69540 Irigny (FR)**
- **EL KISSI, Nadia**
**F-38000 Grenoble (FR)**
- **CHABERT, France**
**F-38550 Auberives Sur Vareze (FR)**
- **SALOMON, Jérémie**
**F-69005 Lyon (FR)**

(74) Mandataire: **Goulard, Sophie et al**
**Ipsilon Brema-Loyer**
**Le Centralis**
**63, avenue du Général Leclerc**
**92340 Bourg-la-Reine (FR)**

(56) Documents cités:
**US-A- 5 493 002**

- **DATABASE CAPLUS [Online] CHEMICAL ABSTRACTS SERVICE, COLUMBUS, OHIO, US; 10 septembre 1998 (1998-09-10), AYAMBEM, A. ET AL.: "Cure, adhesion and composite applications of substituted phenylethynyl terminated poly(arylene ether sulfone)s" XP002399672 extrait de STN Database accession no. 1998:575582 & INTERNATIONAL SAMPE SYMPOSIUM AND EXHIBITION, vol. 43, no. 1, 1998, pages 171-180,**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- **AYAMBEM A ET AL: "Endgroup substituent effects on the rate/extent of network formation and adhesion for phenylethynyl-terminated poly (arylene ether sulfone) oligomers" POLYMER, ELSEVIER SCIENCE PUBLISHERS B.V, GB, vol. 41, no. 13, juin 2000 (2000-06), pages 5109-5124, XP004190983 ISSN: 0032-3861**

## Description

La présente invention concerne un procédé de préparation de films constitués par un polymère réticulé portant des groupements ioniques.

Il est connu qu'un film d'un polymère aromatique portant des groupements ioniques sous forme acide, peut être utilisé comme membrane d'une pile à combustible.

Il est également connu de préparer des films polymères soit par coulée-évaporation à partir d'une solution du polymère dans un solvant volatil, soit par extrusion. Le procédé d'extrusion présente l'avantage de n'utiliser aucun solvant organique, les solvants étant généralement nocifs et inflammables. En outre, l'extrusion est un procédé en continu ayant une forte productivité et permettant d'abaisser significativement le coût d'élaboration du film formant la membrane. Or il est connu que le coût de production des membranes est un des obstacles majeurs dans la commercialisation des piles à combustible à membrane. Enfin le procédé d'extrusion, à l'inverse des procédés par coulée-évaporation, fournit des films ayant une épaisseur homogène sur toute la surface.

Un polymère peut être extrudé s'il possède une bonne stabilité thermique, afin qu'il résiste aux températures qui sont requises pour l'extrusion. Il faut également qu'à ces températures, sa viscosité soit compatible avec le procédé de transformation. Or les polymères comprenant des cycles aromatiques dans leur squelette ont une viscosité élevée. En outre, la présence de groupements ioniques au sein de la structure de ces polymères à cycles aromatiques engendre une augmentation de la température de transition vitreuse, ce qui a pour effet d'augmenter encore davantage la viscosité du polymère, et d'imposer une température d'extrusion plus élevée, qui peut avoir un effet néfaste sur l'intégrité du squelette aromatique.

Il est possible d'abaisser la température de transition vitreuse d'un polymère en limitant sa masse molaire. Ainsi, la mobilité des chaînes est améliorée, ce qui conduit à une diminution de la viscosité du polymère aux températures d'extrusion. Le procédé de transformation par extrusion peut donc se réaliser sans occasionner de dégradations thermiques. Cependant, un polymère de faible masse molaire conduira à un film de faible tenue mécanique. Une des solutions pour résoudre ce problème consiste, après la phase d'extrusion, à augmenter la masse molaire du polymère ou à réticuler le film, respectivement par l'intermédiaire de branchements ou de noeuds de réticulation. Mais cette augmentation de masse ou la réticulation ne doit pas intervenir pendant la phase d'extrusion.

Le but de la présente invention est de fournir un procédé pour l'obtention par extrusion d'un film polymère portant des groupements ioniques.

La présente invention a pour objet un procédé de préparation d'un film constitué par un matériau polymère réticulé portant des groupements ioniques comprenant une partie anionique fixée sur le polymère, et un cation $M^{p+}$ choisi parmi le proton, les ions de métal monovalent, de métal divalent ou de métal trivalent, et les ions organiques choisis parmi les ions ammonium, imidazolium, pyrazolium, tétrazolium, pyridinium, et guanidinium.

Le procédé de la présente invention comprend les étapes consistant à extruder un matériau polymère initial contenant au moins un prépolymère, à polymériser ledit matériau polymère après extrusion, et à soumettre le matériau extrudé à une réaction chimique pour greffer des groupements ioniques, et il est caractérisé en ce que :

- le prépolymère comprend des unités récurrentes comprenant chacune un ou plusieurs groupements aromatiques GA et un ou plusieurs groupements fonctionnels GF ;
- le prépolymère porte un ou plusieurs groupements GP polymérisables par voie thermique à une température supérieure à la température d'extrusion, ou par voie photochimique ;
- le prépolymère porte un ou plusieurs groupements réactifs GR permettant le greffage de groupements ioniques ;
- dans une unité récurrente comprenant plusieurs groupements aromatiques GA et/ou plusieurs groupements fonctionnels GF, les groupements aromatiques peuvent être identiques ou différents, et les groupements fonctionnels GF peuvent être identiques ou différents.

Dans la suite du texte, on désignera par "unité (GA,GF)" une unité récurrente comprenant un ou plusieurs groupements GA, et un ou plusieurs groupements GF, lesdits groupements GA et GF portant éventuellement un groupement réactif GR ou un groupement GP.

Dans un mode de réalisation, le matériau polymère initial contient un seul prépolymère.

Dans un autre mode de réalisation, le matériau polymère initial contient au moins un second prépolymère et/ou un polymère qui comprennent des unités récurrentes (GA,GF). Au moins certaines unités (GA,GF) dudit second prépolymère portent des groupements GP. Certaines unités (GA,GF) dudit polymère portent éventuellement des groupements GP.

Dans le présent texte, un prépolymère comprend un nombre d'unités récurrentes (GA,GF) tel que la masse molaire est inférieure à 15000 $g.mol^{-1}$, de préférence comprise entre 5000-10000 $g.mol^{-1}$, et un polymère comprend un nombre d'unités récurrentes (GA,GF) tel que la masse molaire est supérieure à 15 000 $g.mol^{-1}$, de préférence supérieure à 25 000 $g.mol^{-1}$ et inférieure à 500 000 $g.mol^{-1}$.

Lorsque le matériau polymère initial contient un second prépolymère et/ou un polymère, les unités récurrentes (GA,GF) du second prépolymère et/ou du polymère peuvent être différentes des unités récurrentes (GA,GF) du premier prépolymère.

Le squelette du prépolymère peut être formé par des unités récurrentes (GA,GF) formant une seule chaîne. Il peut aussi être formé par des unités récurrentes (GA, GF) formant une chaîne principale et des chaînes latérales. Les groupements GA d'une unité récurrente sont un élément d'une chaîne principale et le cas échéant d'une chaîne latérale. Un groupement GF peut être un élément d'une chaîne, ou être un substituant latéral d'un groupement GA.

Les unités récurrentes d'un prépolymère peuvent être identiques ou différentes.

Le squelette du polymère est formé de préférence par des unités récurrentes formant une seule chaîne. Comme exemple de polymère, on peut citer notamment les polysulfones commercialisées sous les dénominations UDEL, RADEL A et RADEL R par la société Solvay, sous les dénominations ULTRASON E et ULTRASON S par la société BASF, sous la dénomination SUMIKAEXCEL par la société Sumitomo Chemical, et les polyéther-éther-cétone commercialisées sous les dénominations PEEK HT et PEEK Optima par la société VICTREX.

Un groupement aromatique GA d'une unité récurrente peut être choisi :

- dans le groupe constitué par le groupement phénylène non substitué $-C_6H_4-$, les groupements phénylène portant au moins un substituant, un groupement constitué par deux noyaux phénylène condensés ne portant pas de substituant ou portant au moins un substituant ; ou
- dans le groupe constitué par les noyaux hétéroaromatiques comprenant un ou plusieurs hétéroatomes choisis parmi N, O et S, lesdits groupements hétéroaromatiques portant éventuellement au moins un substituant ;

étant entendu que chacun des substituants d'un groupement phénylène ou d'un noyau hétéroaromatique représente indépendamment des autres un groupement alkyle ayant de préférence de 1 à 5 atomes de carbone, un groupement halogénoalkyle ayant de préférence de 1 à 5 atomes de carbone, un groupement alkényle ayant de préférence de 2 à 8 atomes de carbone, ou un groupement aromatique comprenant un ou plusieurs noyaux aromatiques condensés ou non et portant éventuellement un substituant.

Un groupement fonctionnel GF d'une unité récurrente peut être un groupement éther, un groupement alkylène ayant de 1 à 10 atomes de carbone [par exemple $-C(CH_3)_2-$], un groupement perfluoroalkylène ayant de 1 à 10 atomes de carbone [par exemple $-C(CF_3)_2-$], un carbonyle, un ester, un sulfure, une sulfone, un groupement oxazolyle, un groupement imidazolyle, un groupement amide ou un groupement imide. Les groupements fonctionnels contribuent à la formation du polymère et permettent d'ajuster ses propriétés. Par exemple, un groupement de type éther, sulfure, alkyle ou perfluoroalkyle confère une flexibilité au polymère, alors qu'un groupement du type sulfone ou carbonyle confère au polymère une résistance aux oxydants.

Comme exemples d'unités récurrentes, on peut citer les unités suivantes :

- groupement oxyphénylène répondant à la formule suivante (I), dans laquelle $R^3$ et $R^4$ représentent indépendamment l'un de l'autre H, un groupement alkyle ayant de préférence de 1 à 5 atomes de carbone, un groupement alkényle ayant de préférence de 2 à 8 atomes de carbone, ou un groupement aryle comprenant un ou plusieurs noyaux aromatiques condensés ou non et portant éventuellement un substituant,

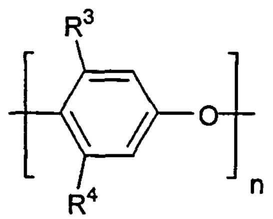

(I)

- groupement aryléthercétone

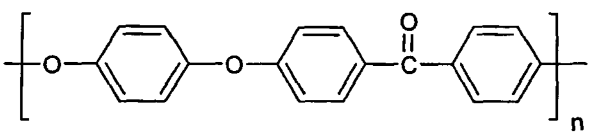

(II)

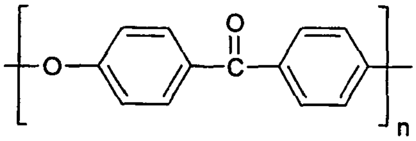

(III)

- groupement benzoxazole

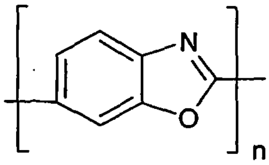

(IV)

- groupement benzimidazole

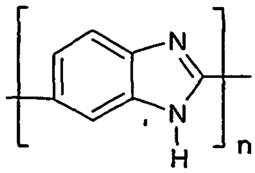

(V)

- groupement acide polyamique (dont la polymérisation en polyimide sera achevée après l'extrusion)

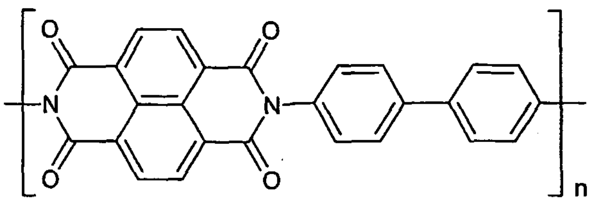

(VI)

- groupement paraphénylène répondant à la formule suivante dans laquelle X représente de préférence H, un atome d'halogène, le groupement OH ou le groupement nitro ;

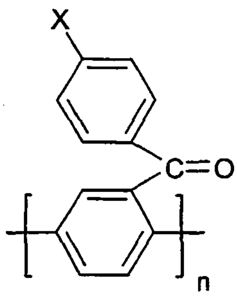

(VII)

- groupement phénylène sulfure

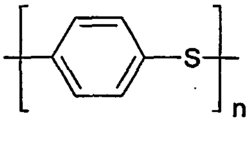

(VIII)

- groupement sulfone répondant à la formule suivante dans laquelle $R^5$ représente une simple liaison, un hétéroatome choisi parmi S et O, un groupement $-C(CH_3)_2-$ ou $-C(CF_3)_2-$, un noyau aromatique portant éventuellement un

substituant, ou plusieurs noyaux aromatiques condensés ou non et portant éventuellement un substituant

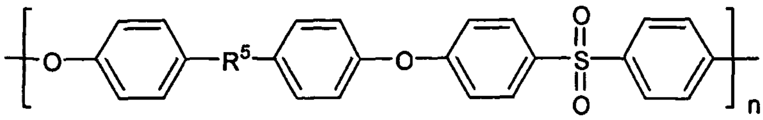

(IX)

Dans les formules (I) à (IX) ci-dessus, n représente le nombre d'unités récurrentes du prépolymère, et n est tel que la masse molaire des prépolymères soit inférieure à 15 000 $g.mol^{-1}$.
Dans les formules (II) à (IX) ci-dessus, au moins l'un des groupements phénylène peut porter au moins un substituant répondant à la définition donnée pour $R^3$ et $R^4$.
Les groupements GP permettant la réticulation ou la polymérisation du prépolymère après extrusion peuvent être situés aux extrémités de la chaîne principale, et/ou le cas échéant sur des chaînes latérales.
Lorsqu'un groupement GP est un groupement polymérisable par voie thermique, il est choisi de préférence parmi les groupements alcynyle répondant à la formule $-C{\equiv}C-R^2$, dans laquelle le groupement $R^2$ représente un groupement aromatique, un groupement alkyle ayant de préférence de 1 à 5 atomes de carbone ou un groupement perfluoroalkyle ayant de préférence de 1 à 5 atomes de carbone. De préférence, $R^2$ représente un groupement aromatique, plus particulièrement un groupement répondant à la définition donnée précédemment pour les groupements GA.
Lorsqu'un groupement GP du type alcynyle est fixé sur le groupement aromatique GA d'une unité récurrente, il peut être fixé directement sur ledit groupement aromatique GA. L'extrémité concernée du prépolymère présente alors la structure $-GA-C{\equiv}C-R^2$.
Lorsqu'un groupement GP est fixé sur le groupement fonctionnel GF d'une unité récurrente, il est fixé par l'intermédiaire d'un groupement $-R^1-$, qui représente un groupement aromatique, un groupement alkylène ou un groupement perfluoroalkylène. De préférence, $R^1$ représente un groupement aromatique, plus particulièrement un groupement aromatique analogue à un groupement GA. L'extrémité ou le substituant concernés du prépolymère présente alors la structure $GF-R^1-C{\equiv}C-R^2$.
Le tableau I suivant donne quelques exemples d'extrémités de prépolymères portant des groupements GP thermopolymérisables fixés sur le groupement fonctionnel GF d'une unité récurrente d'extrémité.

**Tableau I**

| Unité récurrente du prépolymère | Extrémité du prépolymère portant le groupement GP |
|---|---|
| I | 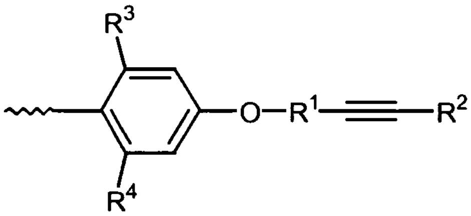 Ia |
| II | IIa 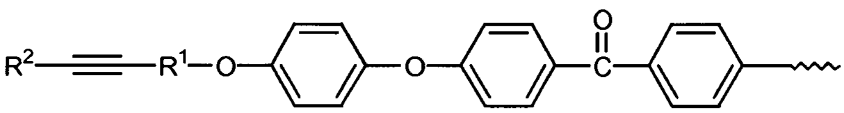 |
| III | IIIa 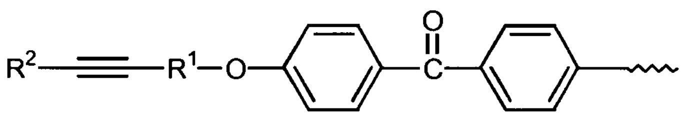 |
| IV | IVa 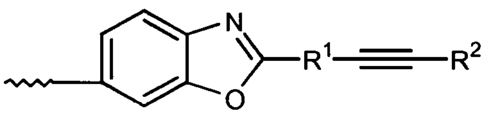 |

(suite)

| Unité récurrente du prépolymère | Extrémité du prépolymère portant le groupement GP |
|---|---|
| V | 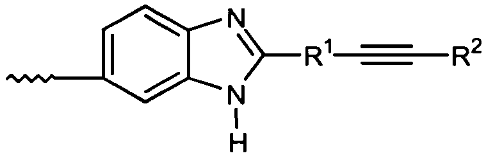 Va |
| VI | 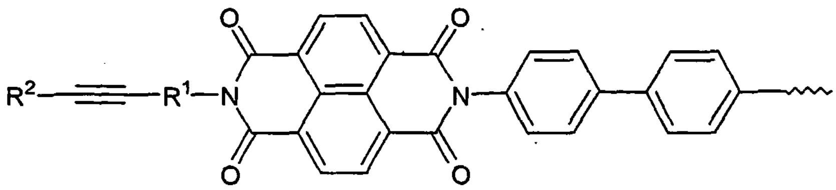 VIa |
| VII | 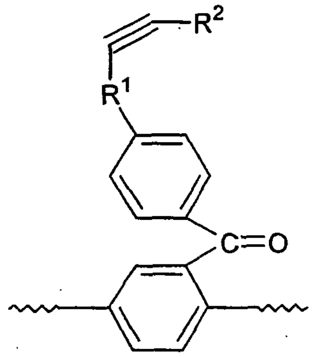 VIIa |
| VIII | 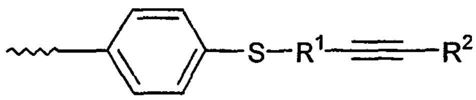 VIIIa |
| IX | 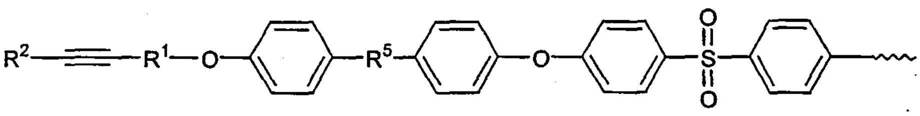 IXa |

La formule IXb ci-dessous donne un exemple de prépolymère polysulfone portant un groupement thermopolymérisable fixé directement sur un groupement aromatique GA à l'une de ses extrémités, et un groupement thermopolymérisable fixé par l'intermédiaire d'un groupement $R^1$ du type biarylsulfonyle sur un groupement GF à l'autre extrémité :

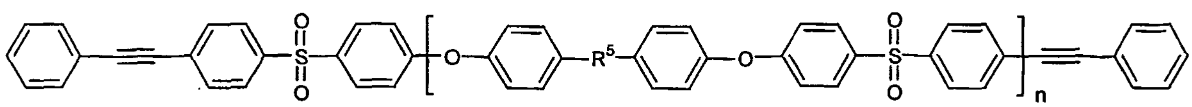

(IXb)

Lorsqu'un groupement GP est un groupement polymérisable ou réticulable par voie photochimique, il peut être choisi parmi le groupement vinyléther $CH_2$=CH-O- et les groupements hétérocycliques dérivés d'un oxirane, d'un oxétane, ou d'une aziridine.

Un groupement réactif GR porté par une unité récurrente (GA,GF), qui permet le greffage d'un groupement ionique sur le film polymère obtenu après extrusion et réticulation, peut être fixé sur la chaîne principale et/ou sur d'éventuelles chaînes latérales. Le groupement réactif GR est choisi en fonction du groupement ionique final souhaité et du réactif disponible pour fixer ledit groupement ionique. Le groupement réactif peut être constitué par un groupement GA ou un substituant d'un groupement GA.

Le groupement ionique final comprend une partie anionique fixée sur le polymère, et un cation $M^+$ choisi parmi le proton, les ions de métal monovalent, de métal divalent ou de métal trivalent, les ions organiques choisis parmi les ions ammonium, imidazolium, pyrazolium, tétrazolium, pyridinium, et guanidinium. Les substituants des cations ammonium, imidazolium, pyrazolium, tétrazolium, pyridinium ou guanidinium peuvent être identiques ou différents, et il sont choisis indépendamment les uns des autres de préférence parmi H, les groupements alkyle ayant de 1 à 6 atomes de carbone (de préférence de 1 à 4 atomes de carbone) et les groupements aryle, ou bien deux substituants forment ensemble un groupement alkylényle.

Quelques exemples de couples appropriés "groupement ionique final / groupement réactif GR " sont donnés dans le tableau .II suivant :

**Tableau II**

| Groupe ionique final | Groupe GR du prépolymère |
|---|---|
| Sulfonate $-SO_3^-(1/p)M^{p+}$ | 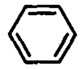 phénylène |
| sulfate $-OSO_3^-(1/p)M^{p+}$ | -OH |
| Phénate $-O^-(1/p)M^{p+}$ | -OH |
| carboxylate $-CO_2(1/p)M^{p+}$ | $-CH_3$ |
| thiocarboxylate $-C(=S)O^-M^+$ | phénylène |
| dithiocarboxylate $-CS_2^-(1/p)M^{p+}$ | phénylène |
| phosphonate $-PO_3^{2-}(2/p)M$ | $-CH_2$-X, X étant un halogène |
| sulfonylamidure $-SO_2N(R^6)^-(1/p)M^{p+}$ | $-SO^-_3(1/p)M^{p+}$ |
| sulfonylimidure $-SO_2N^-(1/p)M^{p+}-SO_2-R^7$ | $-SO^-_3(1/p)M^{p+}$ |

Dans la formule $SO_2NR^{6-}(1/p)M^{p+}$, $R^6$ est un hydrogène, un groupement alkyle ayant de préférence de 1 à 6 atomes de carbone, un groupement alkyle partiellement fluoré ayant de préférence de 1 à 6 atomes de carbone, un groupement alkényle ayant de préférence de 1 à 4 atomes de carbone, un groupement alkényle partiellement fluoré ayant de préférence de 1 à 4 atomes de carbone, un groupement oxyalkylène $CH_3-(O-(CH_2)_m)_n$ dans lequel de préférence $2 \leq m < 5$ et $1 \leq n \leq 10$, ou un groupement aryle comprenant un ou plusieurs noyaux aromatiques condensés ou non et portant éventuellement un substituant.

Dans la formule $-SO_2N^-(1/p)M^{p+}-SO_2-R^7$, $R^7$ est un groupement alkyle ayant de préférence de 1 à 6 atomes de carbone, un groupement alkyle perfluoré ou partiellement fluoré ayant de préférence de 1 à 6 atomes de carbone, un groupement alkényle ayant de préférence de 1 à 4 atomes de carbone, un groupement alkényle perfluoré ou partiellement fluoré ayant de préférence de 1 à 4 atomes de carbone, un groupement oxyalkylène $CH_3-(O-(CH_2)_m)_n$ dans lequel de préférence $2 \leq m < 5$ et $1 \leq n \leq 10$, ou un groupement aryle comprenant un ou plusieurs noyaux aromatiques condensés ou non et portant éventuellement un substituant.

Lorsque GR est un groupement phénylène, il permet le greffage d'un groupement ionique sulfonate, thiocarboxylate ou dithiocarboxylate :

- le greffage d'un groupement ionique sulfonate est effectué par réaction du film polymère avec le chlorosulfonate de triméthylsilyle ou l'acide chlorosulfonique, puis addition de $M^{p+}(OH^-)_p$ ;
- le greffage d'un groupement thiocarboxylate est effectué par réaction du film polymère avec le butyl lithium, puis additions successives de $CS_2$, de $SOCl_2$ et de $M^{p+}(OH^-)_p$ ;
- le greffage d'un groupement dithiocarboxylate est effectué par réaction du film polymère avec le butyl lithium, puis additions successives de $CS_2$, HCl et $M^{p+}(OH^-)_p$.

Lorsque le groupement GR est un groupement OH porté par un groupement aromatique GA :

- la réaction du film avec $M^{p+}(OH^-)_p$ conduit à un phénate ;
- la réaction du film avec $ClSO_3H$, suivie d'une addition de $M^{p+}(OH^-)_p$ transforme le groupement OH en groupement sulfate.

Un groupement GR représentant un méthyle permet de fixer un groupement ionique carboxylate, par réaction

du film polymère avec $KMnO_4$, puis addition de $M^{p+}(OH^-)_p$.

Un groupement GR représentant $-CH_2-X$ dans lequel X est un halogène, permet le greffage d'un groupement ionique phosphonate par réaction avec $P(OCH_3)_3$, puis addition de $M^{p+}(OH^-)_p$.

Un groupement sulfonate $-SO_3^-(1/p)M^{p+}$ fixé sur le film polymère par exemple par le procédé décrit ci-dessus, peut ensuite être utilisé comme groupement GR pour la fixation d'un groupement sulfonylimidure ou sulfonylamidure :

- le greffage d'un groupement sulfonylamidure est effectué par réaction du film polymère portant un groupement sulfonate avec $SOCl_2$ ou $PCl_5$, puis successivement avec $R^6NH_2$ et $M^{p+}(OH^-)_p$;
- le greffage d'un groupement sulfonylimidure est effectué par réaction du film polymère portant un groupement sulfonate avec $SOCl_2$ ou $PCl_5$, puis successivement avec $R^7SO_2NH^-(1/p)M^{p+}$ et $M^{p+}(OH^-)_p$.

La température de l'extrusion est choisie en fonction des groupements GP du prépolymère ou des prépolymères utilisés pour la préparation du film. Lorsque le groupement GP est thermopolymérisable, la température d'extrusion est inférieure à la température de polymérisation. Un prépolymère dont le groupement GP est du type alcyne dans lequel le groupement alcyne est directement lié à au moins un groupement aromatique, a une température de polymérisation supérieure à celle d'un prépolymère dont le groupement GP est un alcyne qui n'est pas directement lié à au moins un groupement aromatique. La température de polymérisation d'un groupement alcyne lié à des groupements aromatiques peut atteindre de l'ordre de 330°C.

L'extrusion peut être effectuée dans un dispositif d'extrusion mono-vis ou bi-vis. Comme exemples de dispositifs, on peut citer l'extrudeuse bi-vis commercialisée sous la dénomination MICROCOMPOUNDER DACA par la société DSMXPLORE. Le choix particulier en fonction du prépolymère est à la portée de l'homme de métier.

En vue de l'extrusion, différents additifs peuvent être ajoutés au prépolymère. L'additif peut être une charge conductrice protonique (par exemple $\alpha$-ZrP ou les acides phosphoantimoniques), ou un renfort (fibre de verre, fibre de carbone, Kevlar®).

Les modalités de la polymérisation dépendent de la nature du groupement GP. Lorsque le groupement GP est un groupement thermopolymérisable, le film de prépolymère obtenu après extrusion est soumis à un traitement thermique qui consiste à placer le film dans un four dès sa sortie de l'extrudeuse. Dans le cas particulier des groupements éthynyle, le traitement thermique consiste avantageusement à soumettre le film à une température entre 250 et 330°C pendant une durée de 2 à 3 heures. Lorsque le groupement GP est un groupement photoréticulable, la réticulation peut être effectuée selon un premier mode de mise en oeuvre, dans lequel on introduit un photoamorceur dans le prépolymère avant extrusion, puis on soumet le film obtenu par extrusion à une irradiation UV dans la plage 200-400 nm avec une intensité de 5-150 $mW/cm^2$. Le photoamorceur peut être un sel de triaryl sulfonium [par exemple $(C_6H_5)_3S^+$, $PF_6^-$]. La réticulation peut en outre être effectuée selon un deuxième mode de mise en oeuvre, dans lequel le film de prépolymère obtenu après extrusion, est soumis à un faisceau d'électrons.

Un prépolymère polysulfone correspondant à la formule (IXb), dans lequel $R^5$ représente une liaison simple ou un groupement aryléther peut être obtenu par un procédé en deux étapes.

- Au cours de la première étape, on prépare une polysulfone téléchélique répondant à la formule (IXc)

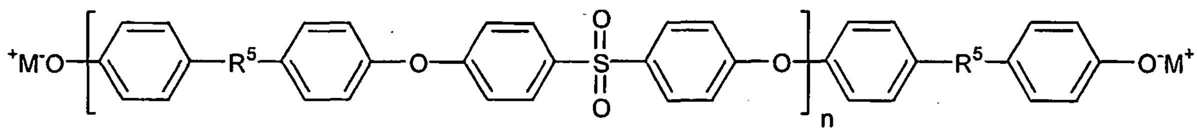

(IXc)

La synthèse du prépolymère (IXc) est effectuée par polycondensation en présence d'un solvant aprotique polaire et d'une base faible, d'un composé aromatique halogéné activé utilisé en excès tel que la 4,4'-dichlorodiphénylsulfone répondant à la formule

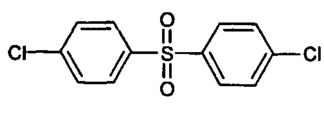

et de deux monomères diphénols tels que le 4,4'-dihydroxybiphényle et le 1,4-bis(p-hydroxyphénoxy)benzène, répondant

respectivement aux formules

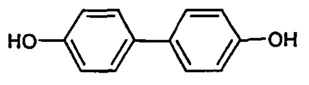

et

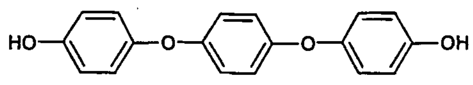

L'utilisation d'un excès de monomères diphénol permet d'obtenir le prépolymère avec une fonction phénol à chaque extrémité de la chaîne, qui se transforme en phénate du cation (par exemple $K^+$) de la base faible (par exemple $K_2CO_3$). La longueur du prépolymère dépend du rapport stoechiométrique entre les différents monomères mis en jeu.

- Au cours de la deuxième étape, les extrémités phénate du prépolymère sont modifiées par réaction du prépolymère IXc avec le monomère monofonctionnel répondant à la formule

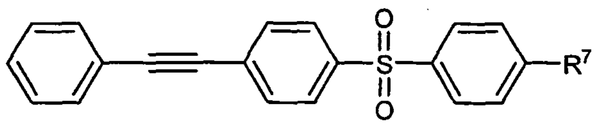

(X)

dans laquelle $R^7$ est un halogène.

Dans un mode de réalisation particulier, le procédé de préparation du prépolymère (IXc) à partir des monomères 4,4'-dichlorodiphénylsulfone, 4,4'-dihydroxybiphényle, 1,4-bis(p-hydroxyphénoxy)benzène et (X) comprend les étapes suivantes :

- on prépare une solution de 4,4'-dihydroxybiphényle et de 1,4-bis(p-hydroxyphénoxy)benzène dans le N,N-diméthylacétamide dans laquelle les deux réactifs représentent de préférence approximativement 30% de la masse. On ajoute ensuite du carbonate de calcium à cette solution, puis on la soumet à une distillation azéotropique, à une température de 150°C pendant 2 heures sous agitation mécanique et sous courant d'azote, pour éliminer l'eau ;
- à la solution déshydratée obtenue, on ajoute de la 4,4'-dichlorodiphénylsulfone, puis on ramène la concentration en réactifs de la solution à 20% en masse par addition de la quantité appropriée du solvant N,N-diméthylacétamide, puis on porte la solution à une température de 170°C, et on maintient cette température pendant 20 heures sous agitation mécanique et sous courant d'azote ;
- on ajoute ensuite le monomère monofonctionnel (X) à la solution, et on ramène la concentration en réactifs de la solution à 20% en masse par addition de la quantité appropriée du solvant N,N-diméthylacétamide, puis on porte la solution à une température de 170°C et on maintient cette température pendant 10 heures sous agitation mécanique et sous courant d'azote ;
- on extrait le prépolymère par précipitation dans l'eau permutée, filtration, et rinçages à l'eau permutée et à l'acétone ;
- on sèche le prépolymère (IXc) à 100°C sous vide.

La 4,4'-dichlorodiphénylsulfone et le 4,4'-dihydroxy-biphényle sont des produits disponibles dans le commerce.

La synthèse du 1,4-bis(p-hydroxyphénoxy)benzène (BHPB) peut être effectuée selon le schéma réactionnel suivant :

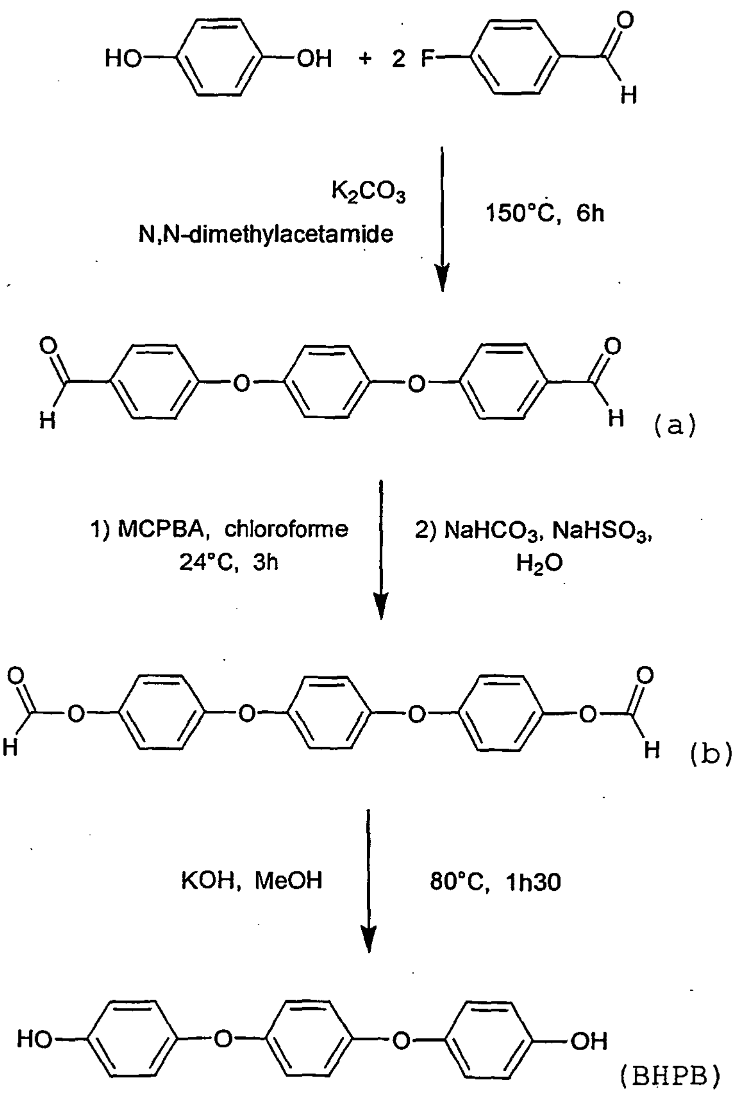


La première étape correspond à une double substitution nucléophile impliquant le 4-fluorobenzaldéhyde et l'hydroquinone en présence d'une base faible, de préférence le carbonate de potassium, et d'un solvant aprotique polaire, de préférence le N,N-diméthylacétamide, qui conduit à la formation du composé 1,4-bis(p-formylphénoxy)benzène (a). Le composé (a) est ensuite oxydé en 1,4-bis(p-formyloxyphénoxy)benzène (b) en présence de l'acide 3-chloroperoxybenzoique (MCPBA). Puis l'hydrolyse du composé (b) en milieu basique (de préférence KOH), donne le composé diphénol BHPB souhaité.

La synthèse de la 4-chloro-(4'-phényléthynyl) diphénylsulfone (CPEDPS) [composé (X) dans lequel $R^2$ est Cl] est effectuée en deux étapes successives. La première est gouvernée par une substitution électrophile aromatique de type Friedel-Crafts, impliquant le chlorobenzène et le chlorure de 4-bromobenzoyl en présence d'un solvant chloré, de préférence le 1,2-dichloroéthane, et d'un acide de Lewis, de préférence $AlCl_3$, selon le schéma réactionnel suivant :

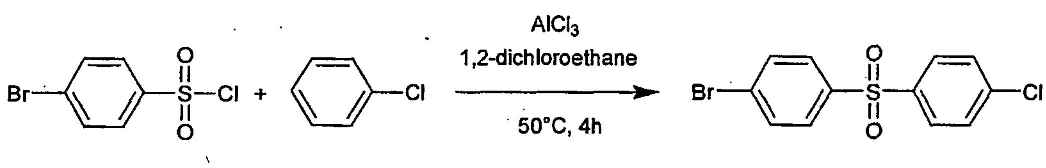


La deuxième étape consiste à substituer le brome du composé 4-bromo-4'-chlorodiphénylsulfone par la fonction phénylacétylène, en présence d'un catalyseur à base de palladium(II), de préférence le chlorure de bis(triphénylphosphine) palladium(II), et d'un co-catalyseur, de préférence l'iodure de cuivre(I). Le schéma réactionnel est le suivant.

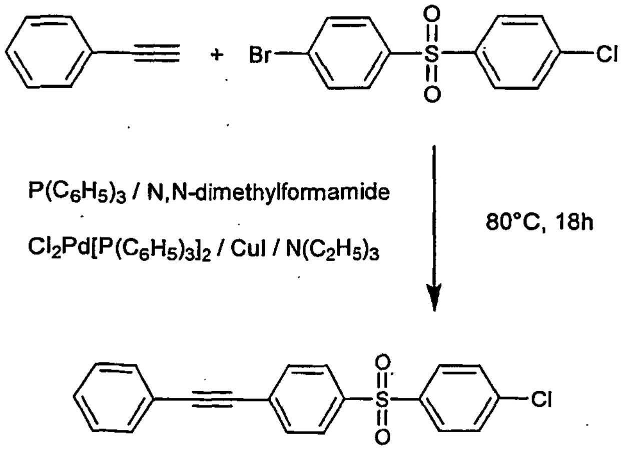


Les groupements ioniques sont introduits dans le film obtenu après polymérisation du film obtenu après extrusion, par un procédé comprenant les étapes suivantes :

- on fait gonfler le film polymérisé par un solvant anhydre,
- on met en contact ledit film gonflé avec une solution dans un solvant anhydre du réactif précurseur du groupement ionique, sous agitation,
- on extrait le film de la solution et on le lave à l'eau pure, on le sèche sous vide, puis on le trempe dans l'eau distillée en vue de sa conservation.

Lorsque le prépolymère est une polysulfone, l'unité récurrente du prépolymère modifié obtenu peut être représenté par la formule suivante

(IXd) 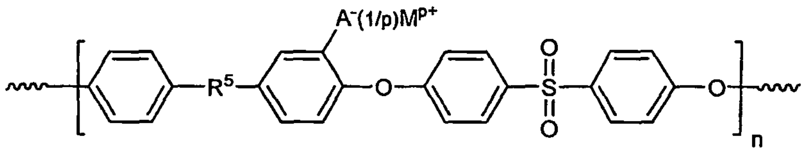

Dans un mode de réalisation particulier, on introduit des groupements ioniques $-SO_3M^+$ dans un film sec obtenu par réticulation d'un prépolymère polysulfone comprenant des groupements GP terminaux du type alcynyle et dont les groupements réactifs GR sont constitués par certains des groupements GA, par un procédé comprenant les étapes suivantes :

a. Gonflement du film sec par un solvant anhydre choisi par exemple parmi le nitroéthane, le nitrométhane, le chloroforme et le dichloroéthane ;
b. Préparation d'une solution anhydre de chlorosulfonate de triméthylsilyle ou d'acide chlorosulfonique dans le solvant anhydre choisi ;
c. Mise en contact du film gonflé obtenu à la 1$^{ère}$ étape avec la solution préparée au cours de la 2$^{ème}$ étape ;
d. lavage du film par le solvant pur utilisé dans la 1$^{ère}$ étape ;
e. séchage du film sulfoné sous vide dynamique, à une température comprise entre 40 et 80°C, par exemple à 50°C.
f. trempage du film dans l'eau distillée.

L'unité récurrente du prépolymère modifié obtenu peut être représentée par la formule suivante :

(IXe) 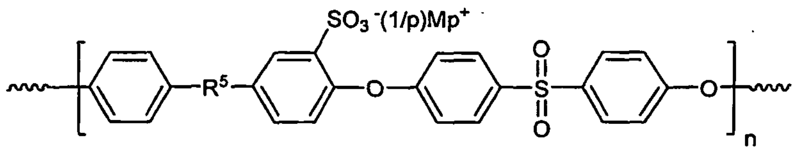

La fixation de groupements $-SO_3H$ sur une unité récurrente éthersulfone peut être effectuée par substitution électrophile sur le phényle d'un GA, avec un réactif de sulfonation choisi parmi l'acide chlorosulfonique ACS ou le

chlorosulfonate de triméthylsilyle CST. Le procédé comprend les étapes suivantes :

a) préparation d'une solution anhydre d'un réactif de sulfonation dans un solvant aprotique, ledit réactif étant choisi parmi ACS ou CST;
b) mise en contact de ladite solution avec le film de poly(éthersulfone) pendant une durée comprise entre 5 min et 24 heures, à une température comprise entre 20°C et 80°C ;
c) lavage du film avec le solvant aprotique ;
d) séchage sous vide dynamique, à une température entre 40°C et 80°C.

Le film peut ensuite être conservé dans l'eau distillée.

Dans un mode de réalisation, le procédé comprend une étape préliminaire de gonflement du film, dans le solvant aprotique, avant sa mise en contact avec la solution de réactif.

Le solvant aprotique doit être inerte vis-à-vis du réactif de sulfonation mais capable de le dissoudre, et il ne doit pas dissoudre le film polymère avant ou après la fixation de groupements ioniques. Il peut être choisi notamment parmi le nitroéthane (NE), le nitrométhane (NM), le dichloroéthane (DCE), le cyclohexane (CH), l'éther de pétrole (EP), le chloroforme (CHL), ou un de leurs mélanges.

Un film obtenu à la fin de l'étape d'extrusion est intrinsèquement anhydre, et il peut être soumis à la réaction de fixation des groupements sulfonates. Un film qui a été conservé après extrusion doit être soumis à un séchage immédiatement avant sa mise en réaction avec le traitement de sulfonation. Le séchage peut être effectué à 110°C pendant 2 heures sous une vide de 10 mbars.

Un film obtenu par le procédé de l'invention est constitué par un polymère réticulé comprenant des unités récurrentes (GA,GF) telles que définies précédemment, et des groupements ioniques.

Dans un mode de réalisation préféré, un film obtenu par le procédé de l'invention a une épaisseur comprise entre 10 $\mu$m et 300 $\mu$m. Il présente dans ce cas une répartition homogène des groupements ioniques dans sa masse. Une épaisseur particulière est obtenue par le réglage des conditions d'extrusion (vitesse de rotation des vis, débit d'alimentation), qui est à la portée de l'homme de métier.

Lorsque le matériau à extruder consiste en un mélange de deux prépolymères comprenant des groupements GP polymérisables respectivement par voie thermique et par voie photochimique, la réticulation successive par ces deux voies conduit à un réseau interpénétré. Si le matériau polymère initial contient un polymère ne comprenant pas de groupements GP, la polymérisation post-extrusion forme un réseau semi-interpénétré.

Le polymère constituant le film peut être constitué par des unités récurrentes choisies parmi les unités (I) à (V) et (VII) à (X), ou par une unité (VI') résultant de la polymérisation d'une unité du type groupement acide polyamique répondant à la formule (VI), au moins certaines de ces unités portant des groupements ioniques. Une unité (VI') peut être représentée par la formule ci-dessous :

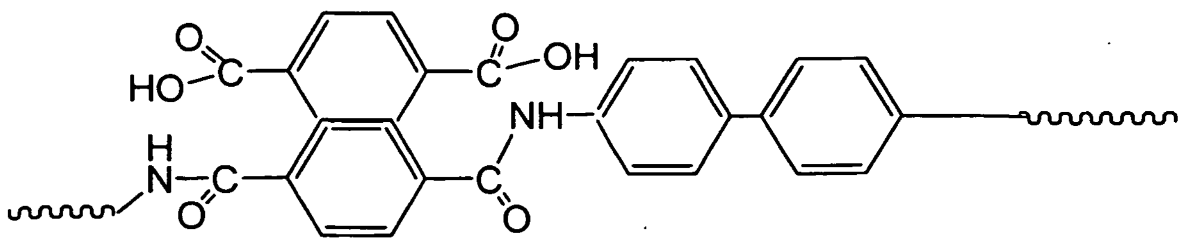

Les groupements ioniques du polymère constituant le film peuvent être des groupements sulfonate $-SO_3^-(1/p)M^{p+}$, des groupements sulfate $-OSO_3^-(1/p)M^{p+}$, des groupements phénate $-O^-(1/p)M^{p+}$, des groupements carboxylate $-CO_2^-(1/p)M^{p+}$, des groupements thiocarboxylate $-C(=S)O^-(1/p)M^{p+}$, des groupements dithiocarboxylate $-CS_2^-(1/p)M^{p+}$, des groupements phosphonate $-PO_3^{2-}(2/p)M^{p+}$, des groupements sulfonylamidure $-SO_2N(R^6)^-(1/p)M^{p+}$, ou des groupements sulfonylimidure $-SO_2N^-(1/p)M^{p+}-SO_2-R^7$. Dans ces groupements, M est choisi parmi le proton, les ions de métal monovalent, de métal divalent ou de métal trivalent, les ions organiques tels que les ions ammonium, imidazolium, pyrazolium, tétrazolium, pyridinium, et guanidinium, p est la valence du cation, et $R^6$ et $--R^7$ ont la signification donnée précédemment.

Un film obtenu selon le procédé de la présente invention peut être utilisé avantageusement comme membrane pour une pile à combustible utilisant comme combustible l'hydrogène (PEMFC) ou le méthanol (DMFC), comme membrane échangeuse d'ions, comme membrane d'électrodialyse, comme électrolyte polymère dans une batterie au lithium, un supercondensateur ou un dispositif électrochrome.

Lorsque le film de polymère est destiné à être utilisé comme électrolyte d'une batterie au lithium, d'un supercondensateur ou d'un dispositif électrochrome, le cation est Li.

Une batterie au lithium comprend une électrode négative et une électrode positive séparées par un électrolyte polymère gélifié ou non par des solvants organiques. L'électrolyte peut être un film obtenu par le procédé de l'invention.

Un système électrochrome comprend une électrode transparente et une électrode constituée par une matière active dont la couleur varie avec le degré d'oxydation, les deux électrodes étant séparées par un électrolyte conducteur ionique, qui peut être constitué par un film obtenu par le procédé selon la présente invention. L'électrode transparente peut être constituée par exemple par un oxyde d'indium et d'étain (ITO) ou un fluoroxyde d'étain (FTO). L'autre électrode change de couleur lorsque des ions $Li^+$ s'insèrent dans la matière active qui peut être par exemple l'oxyde de tungstène $WO_3$.

Un supercondensateur comprend deux électrodes à base de carbone séparées par un électrolyte polymère conducteur qui peut être gélifié ou non par des solvants organiques. L'électrolyte peut être constitué par un film obtenu par le procédé selon l'invention.

Lorsqu'un film obtenu par le procédé de l'invention est utilisé comme membrane échangeuse d'ions ou comme membrane d'électrodialyse, le cation des groupements ioniques est choisi parmi le proton et les ions ammonium, imidazolium, pyrazolium, tétrazolium, pyridinium, et guanidinium.

Lorsque le film de polymère est destiné à être utilisé comme membrane dans une pile à combustible, le cation peut être choisi parmi H ou les ions ammonium, imidazolium, pyrazolium, tétrazolium, pyridinium, et guanidinium. Le proton est particulièrement préféré.

La présente invention est décrite plus en détail à l'aide des exemples suivants, auxquels elle n'est cependant pas limitée.

Dans les exemples, divers échantillons ont été soumis à des analyses par :

- résonance magnétique nucléaire (RMN) du proton, du carbone et du DEPT (Spectre d'augmentation sans déformation par transfert de polarisation), à l'aide d'un appareil BRUKER AC250. Le produit à analyser est mis en solution dans le diméthylsulfoxide (DMSO).
- chromatographie phase vapeur couplée avec un spectromètre de masse (GCMS), à l'aide d'un appareil CPV HP 5890 series II couplé avec un détecteur IR HP 5965B et un spectromètre de masse HP 5971A. La montée en température appliquée est de 10°C/min dans un intervalle allant de 150 à 300°C.
- chromatographie d'exclusion stérique (CES), en utilisant comme appareil un HPLC Waters (pompe W510, réfractomètre différentiel W410, deux colonnes PIGEL Mixed-D en série à 70°C), étalon polystyrène.
- calorimétrie différentielle à balayage (DSC), à l'aide d'un appareil DSC 822e de Mettler Toledo. La montée en température appliquée est de 5°C/min sous argon (80 mL/min).

Les exemples 1 et 2 décrivent la préparation du monomère bifonctionnel bisphénol 1,4-bis(p-hydroxyphénoxy)-benzène et du monomère monofonctionnel 4-chloro-(4'-phényléthynyl)diphénylsulfone.

Les exemples 3 à 5 décrivent des procédés de préparation de prépolymères polysulfones extrudables et réticulables.

Les exemples 6 à 8 concernent l'extrusion de prépolymères obtenus selon les exemples 3 à 5.

L'éxemple 9 concerne la thermoréticulation de films de prépolymères extrudés.

Les exemples 10 et 11 concernent la préparation de films portant des groupements ioniques sulfonés à partir des films préalablement extrudés et réticulés.

Exemple 1

<u>Préparation du 1,4-bis(p-hydroxyphénoxy)benzène</u>

Dans un ballon tricol de 500 mL muni d'un col de cygne, d'une agitation magnétique et balayé par un courant d'azote on a introduit 15 g (136,2 mmol) d'hydroquinone, 37,2 g (299,7 mmol) de 4-fluorobenzaldéhyde, 22,59 g (163,4 mmol) de carbonate de potassium et 120 mL de N,N-diméthyl-acétamide, ce qui correspond à une concentration en réactifs organiques de la solution de 30% en masse. La solution a été laissée sous agitation pendant 6 heures à 150°C. Une partie du produit formé, de couleur rougeâtre, a commencé à précipiter.

En fin de réaction, déterminée par RMN, le produit est extrait par précipitation, en versant le mélange réactionnel dans 500 mL d'eau permutée. Le précipité ainsi obtenu a été filtré sur fritté, puis lavé abondamment à l'eau permutée et au méthanol. Le produit a ensuite été séché pendant 5 heures à l'étuve à 80°C sous vide. Un rendement brut de 99% a été obtenu.

La deuxième étape est effectuée de la façon suivante : dans un ballon tricol de 1 L équipé d'un réfrigérant, d'une agitation magnétique et balayé par un courant d'azote, on a introduit 77,43 g (448,8 mmol) d'acide 3-chloroperoxybenzoïque à 70% et 200 mL de chloroforme. Après homogénéisation du mélange, on a ajouté goutte à goutte, à l'aide d'une ampoule à addition, 40 g (125,7 mmol) de 1,4-bis(p-formylphénoxy)benzène et 300 mL de chloroforme.

Après 3 heures d'agitation à température ambiante, le milieu réactionnel a été versé dans 500 mL d'eau permutée contenant 65,38 g (157,1 mmol) de bisulfite de sodium afin d'éliminer le peracide résiduel. 31,67 g (377 mmol) de bicarbonate de sodium ont ensuite été ajoutés pour éliminer l'acide 3-chlorobenzoique formé. Le mélange a été laissé sous agitation jusqu'à obtention de deux phases limpides.

A l'aide d'une ampoule à décanter, on a récupéré la phase organique. La formation d'une émulsion a été éliminée par addition de chlorure de sodium. La phase organique a été lavée deux fois à l'eau permutée, séchée au sulfate de sodium, puis concentrée à l'évaporateur rotatif. Le produit brun obtenu a été séché 5 heures à l'étuve à 80°C sous vide.

Le 1,4-bis(p-formyloxyphénoxy)benzène a ensuite été lavé dans un mélange eau permutée/méthanol (2/3) à 80°C. Le produit récupéré par filtration a été séché à l'étuve à 80°C sous vide pendant 5 heures. Le rendement est de 89%.

Au cours de la dernière étape, le 1,4-bis(p-formyloxy-phénoxy)benzène a été hydrolysé de la manière suivante. Dans un ballon monocol de 500 mL équipé d'un réfrigérant et d'une agitation magnétique on a introduit 30 g (85,6 mmol) de 1,4-bis(p-formyloxyphénoxy)benzène, 86 mL d'une solution de méthanol contenant de l'hydroxyde de potassium à 1 M, et on a ajouté 150 mL de méthanol. Le mélange réactionnel a été laissé sous agitation pendant 90 minutes à l'ébullition du solvant.

En fin de réaction, la solution a été versée dans 500 mL d'eau permutée. Le précipité brun ainsi obtenu a été filtré sur fritté, puis rincé 3 fois. Le produit a ensuite été séché pendant 5 heures à l'étuve à 80°C sous vide.

Le 1,4-bis(p-hydroxyphénoxy)benzène est préalablement dissous dans l'acétate d'éthyle et purifié par chromatographie sur colonne avec le mélange acétate d'éthyle/ cyclohexane (1/1) comme éluant. Le produit récupéré est ensuite sublimé afin de l'obtenir avec une grande pureté. Le rendement massique total obtenu est de 71%.

Caractérisation du 1,4-bis(p-hydroxyphénoxy)benzène

La structure du produit obtenu a été caractérisée par RMN $^{1}H$, $^{13}C$ et DEPT.

La figure 1 représente le spectre $^{1}H$-RMN du 1,4-bis(p-hydroxyphénoxy)benzène.
La figure 2 représente le spectre $^{13}C$-RMN de 1,4-bis(p-hydroxyphénoxy)benzène à sa partie supérieure, et le spectre DEPT à sa partie inférieure.

Lesdits spectres sont caractéristiques du 1,4-bis(p-hydroxyphénoxy)benzène. La pureté de ce composé est vérifiée par cette analyse. Les déplacements chimiques des protons et leurs constantes de couplage $^{a}J_{b-c}$, qui caractérisent les interactions entre protons voisins ("b" étant le proton considéré, "c" le proton voisin de "b" et "a" représentant le nombre de liaisons qui sépare les deux protons pris en compte), sont donnés dans le tableau III ci-dessous. "Caractéristique" représente le nombre de pics pour un proton ; "indice" correspond à la formule qui est donnée sur le spectre ; la "Constante de couplage" est calculée en fonction de la distance entre les pics divisé par la fréquence de l'appareil.

**Tableau III**

| déplacement chimique | caractéristique | indice | constante de couplage | nombre de protons |
|---|---|---|---|---|
| 6,78 et 6,75 ppm | doublet | 2 | $^{3}J_{2-3}$ = 8,9 Hz | 4 |
| 6,88 et 6,84 ppm | doublet | 3 | $^{3}J_{3-2}$ = 9,1 Hz | 4 |
| 6,89 ppm | singulet | 4 | aucune | 4 |
| 9,31 ppm | singulet | 1 | aucune | 2 |

**Exemple 2**

Préparation de la 4-chloro-(4'-phényléthynyl)diphénylsulfone

Dans un ballon tricol de 250 mL équipé d'un réfrigérant surmonté d'un piège à HCl gazeux (KOH dissous dans l'eau), et d'une agitation magnétique, et balayé par un courant d'azote, on a introduit 21 g (82,2 mmol) de chlorure de 4-bromobenzènesulfonyle, 13,14 g (98,6 mmol) de chlorure d'aluminium ($AlCl_3$) et 40 mL de 1,2-dichloroéthane.

Le mélange réactionnel a été laissé sous agitation pendant 15 minutes, puis on a ajouté, goutte à goutte un mélange de 11,10 g (98,6 mmol) de chlorobenzène et de 5 mL de 1,2-dichloroéthane. Après addition, on a laissé agir pendant 4 heures à 50°C.

A la fin de la réaction, la solution a été versée dans 400 mL d'eau permutée. Deux phases se sont formées, puis, après une heure d'agitation, un produit jaunâtre a précipité. Il a été filtré sur fritté, puis rincé, puis lavé à l'isopropanol

pour éliminer le chlorobenzène résiduel. Le produit a ensuite été séché pendant 5 heures à l'étuve à 80°C sous vide. On a obtenu la 4-bromo-4'-chlorodiphénylsulfone avec un rendement brut de 91%.

Dans un ballon tricol de 250 mL équipé d'un réfrigérant, d'une agitation magnétique et isolé sous vide d'argon, on a introduit 28,4 mg (0,15 mmol) d'iodure de cuivre(I), 62,8 mg (0,089 mmol) de chlorure de bis(triphénylphosphine)-palladium(II), 156,4 mg (0,596 mmol) de triphénylphosphine et 20 mL de N,N-diméthylformamide. La solution a été laissée sous agitation pendant 10 minutes, puis on a ajouté 24,71 g (74,5 mmol) de 4-bromo-4'-chlorodiphénylsulfone, 7,61 g (74,5 mmol) de phénylacétylène, 15 mL de triéthylamine et 80 mL de N,N-diméthylformamide anhydre. Après addition, on a laissé agir pendant 18 heures à 80°C.

A la fin de la réaction, la solution a été filtrée à chaud sur célite afin d'éliminer les catalyseurs. La célite a ensuite été rincée 3 fois au 1,2-dichloroéthane. Le filtrat a été récupéré, puis concentré à l'évaporateur rotatif. Le produit beige obtenu a été séché pendant 5 heures à l'étuve à 80°C sous vide.

La 4-chloro-(4'-phényléthynyl)diphénylsulfone (CPEDPS) a été purifiée par recristallisation dans l'acétonitrile. Le produit a ensuite été séché à l'étuve à 80°C sous vide pendant 5 heures. Le rendement total est de 85%.

Caractérisation de la 4-chloro-(4'-phényléthynyl)diphénylsulfone

La structure du CPEDPS est confirmée par RMN $^1$H, $^{13}$C et DEPT.

La figure 3 représente le spectre $^1$H-RMN de la 4-chloro-(4'-phényléthynyl)diphénylsulfone.

La figure 4 représente le spectre $^{13}$C-RMN de la 4-chloro-(4'-phényléthynyl)diphénylsulfone à sa partie supérieure, et le spectre DEPT à sa partie inférieure.

Lesdits spectres concordent avec la structure attendue. Les déplacements chimiques des protons et leurs constantes de couplage (J) sont donnés dans le tableau IV ci-dessous.

**Tableau IV**

| déplacement chimique | caractéristique | indice | constante de couplage | nombre de protons |
|---|---|---|---|---|
| 7,45 et 7,43 ppm | doublet dédoublé | 1 et 2 | mauvaise résolution | 3 |
| 7,59 et 7,57 ppm<br>7,59 et 7,58 ppm | doublet dédoublé | 3 | $^3J_{3-2}$ = 5,9 Hz<br>$^4J_{3-1}$ = 2,3 Hz | 2 |
| 7,7 et 7,66 ppm | doublet | 7 | $^3J_{7-6}$ = 8,6 Hz | 2 |
| 7,78 et 7,75 ppm | doublet | 4 | $^3J_{4-5}$ = 8,4 Hz | 2 |
| 7,98 et 7,95 ppm | doublet | 5 | $^3J_{5-4}$ = 8,6 Hz | 2 |
| 7,99 et 7,96 ppm | doublet | 6 | $^3J_{6-7}$ = 8,6 Hz | 2 |

L'analyse GCMS permet de confirmer la pureté du produit. En effet, le chromatogramme montre un pic unique correspondant à une masse molaire de 352 g/mol. Cette valeur correspond bien à la masse du CPEDPS.

**Exemple 3**

Préparation du prépolymère O-BP2

Le prépolymère O-BP2 a une masse molaire prédéfinie $M_0$ = 2000 g.mol$^{-1}$. Il est préparé à partir du diphénol 4,4'-dihydroxybiphényle.

La première étape de la synthèse est effectuée par polycondensation de 4,4'-dichlorodiphénylsulfone et de 4,4'-dihydroxybiphényle, en présence de carbonate de potassium, et dans le N,N-diméthylacétamide. La 4,4'-dichlorodiphénylsulfone a été préalablement purifiée par sublimation, et le 4,4'-dihydroxybiphényle par recristallisation dans l'éthanol. Le 4,4'-dihydroxybiphényle est utilisé en excès afin d'obtenir un prépolymère comprenant un groupement phénol (transformé en phénate de potassium par les ions potassium du carbonate de potassium) à chacune de ses extrémités. Le schéma réactionnel est le suivant :

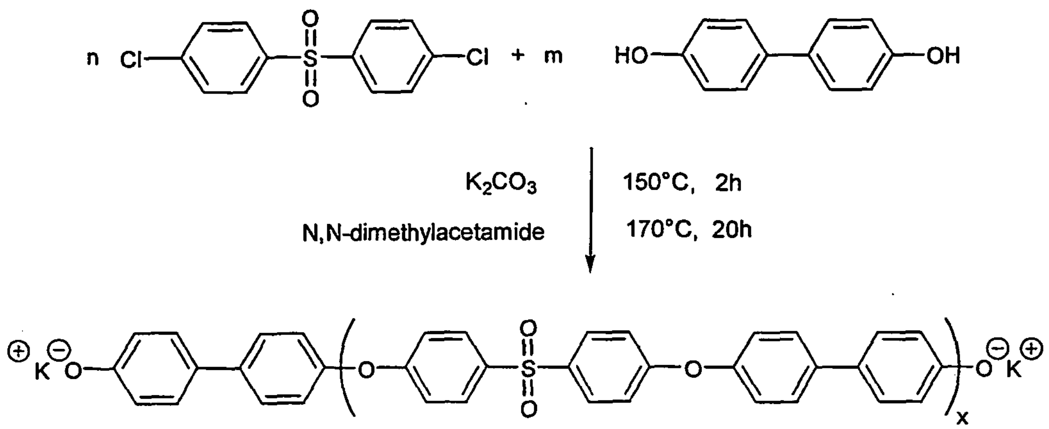


(a)

Dans une deuxième phase, le prépolymère (a) est modifié chimiquement aux extrémités par réaction avec le monomère monofonctionnel CPEDPS, selon le schéma réactionnel suivant :

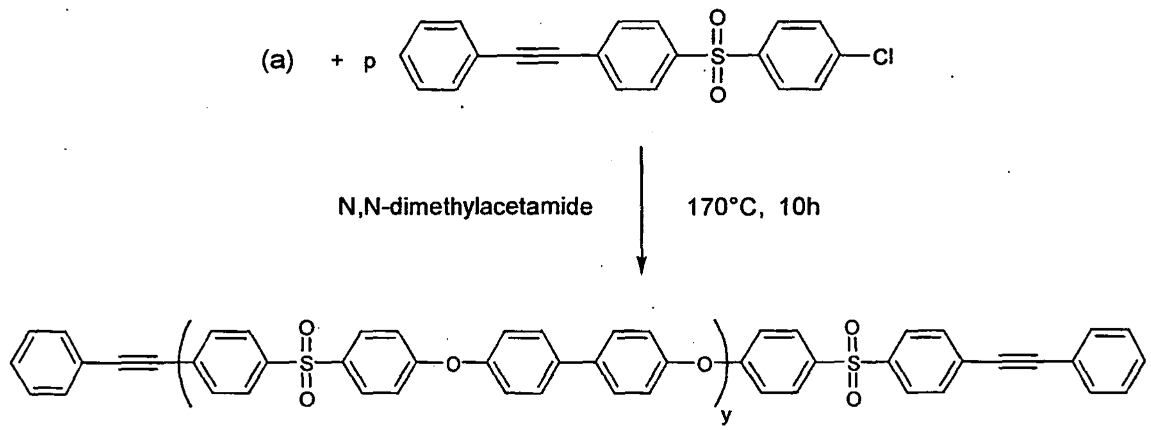


La synthèse a été effectuée selon le mode opératoire suivant. Dans un ballon tricol de 250 mL équipé d'une agitation mécanique, d'un Dean-Stark surmonté d'un réfrigérant et balayé par un courant d'azote, on a introduit 11,0308 g (59,2 mmol) de 4,4'-dihydroxybiphényle, 9,824 g (71,0 mmol) de carbonate de potassium et 5 mL de N,N-diméthylacétamide, ce qui correspond à une concentration en monomère diphénol de 30% en masse. A ce mélange, on a ajouté 10 mL de toluène, puis on l'a porté à 150°C, et on a maintenu cette température pendant 2 heures afin d'éliminer l'eau par distillation azéotropique.

On a ajouté ensuite 12,7038 g (44,24 mmol) de 4,4'-dichlorodiphénylsùlfone et 40 mL de N,N-diméthylacétamide afin d'abaisser la concentration en réactifs organiques de la solution à 20% en masse. La solution a ensuite été agitée pendant 20 heures à 170°C après que le Dean-Stark ait été remplacé par un col de cygne.

Finalement on a ajouté 15,8778 g (45,mmol) de 4-chloro-(4'-phényléthynyl)diphénylsulfone et 63 mL de N,N-diméthylacétamide pour maintenir la concentration à 20% en masse, et on a agité la solution pendant 10 heures à 200°C.

Le prépolymère a été extrait par précipitation dans l'eau permutée. Après filtration sur fritté, rinçage à l'eau permutée puis à l'acétone, pour éliminer l'excès de 4-chloro-(4'-phényléthynyl)diphénylsulfone, le prépolymère a été séché à l'étuve à 100°C sous vide.

Les quantités des réactifs ont été déterminées de la façon suivante. Le nombre de motifs de répétition peut être déterminé en considérant la structure du prépolymère polysulfone O-BP2 répondant à la formule suivante (qui correspond à la formule IXb dans laquelle $R^5$ est une simple liaison)

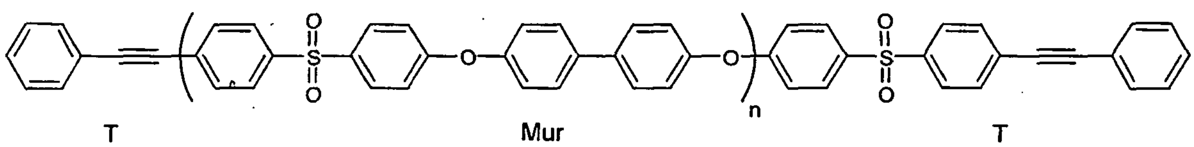

T Mur T

et à partir de la relation (I) $M_0 = n \times M_{ur} + T$ dans laquelle $M_{ur}$ représente la masse molaire de l'unité récurrente (400,454 g.mol$^{-1}$), T la masse molaire des extrémités de chaînes (418,513 g.mol$^{-1}$) et $M_0$ la masse molaire prédéfinie du prépolymère. Si l'on désigné par $N_0$ le nombre de moles de prépolymère souhaité, $N_o$ étant défini par la relation $N_0 = m_0/M_0$, $m_0$ étant la masse du prépolymère, alors le nombre $n_r$ de moles de chaque réactif peut être déterminé à partir des relations résumées dans le tableau V ci-dessous.

Tableau V

| réactif | nombre de moles |
|---|---|
| 4,4'-dichlorodiphénylsulfone | $n_r = N_0$ (n-1) |
| 4,4'-dihydroxybiphényle | $n_r = nN_0$ |
| 4-chloro-(4'-phényléthynyl)diphénylsulfone (1,5 eq) | $n_r = 1,5 \times 2N_0$ |
| carbonate de potassium (1,2 eq) | $n_r = 1,2 \times nN_0$ |

Caractérisation du prépolymère O-BP2

Le prépolymère O-BP2 a fait l'objet d'une caractérisation structurale par RMN $^1$H, $^{13}$C et DEPT.

La figure 5 représente le spectre $^1$H-RMN du prépolymère O-BP2.

La figure 6 représente le spectre $^{13}$C-RMN du prépolymère O-BP2 à sa partie supérieure, et le spectre DEPT à sa partie inférieure.

Lesdits spectres montrent une structure bien définie et conforme à celle recherchée. Le spectre du carbone permet de confirmer que les chaînes sont très majoritairement terminées par un motif CPEDPS.

La figure 7 représente les spectres carbone du prépolymère intermédiaire à sa partie supérieure et du prépolymère O-BP2 désiré à sa partie inférieure. La superposition des deux spectres met en évidence les extrémités de chaînes phénols. Les pics de la courbe supérieure qui sont entourés correspondent au phénol.

La masse molaire du prépolymère O-BP2, mesurée à partir du spectre RMN $^1$H, est de 3100 g.mol$^{-1}$. Cette valeur est déterminée à l'aide de la relation

$$n = \frac{A_{ur}/N_{ur}}{A_t/N_t},$$

dans laquelle $A_t$ correspond à l'aire des pics caractéristiques des protons aromatiques de la terminaison phénylacétylène, $A_{ur}$ est l'aire du pic caractéristique d'un proton du motif de répétition, $N_{ur}$ est le nombre de protons par motif de répétition caractérisé par le pic d'aire $A_{ur}$ et $N_t$ est le nombre de protons caractérisé par le pic d'aire $A_t$. Le nombre moyen de motif de répétition (n) de la chaîne macromoléculaire peut être déterminé en utilisant la relation (I) donnée précédemment, de laquelle on déduit la masse.

La masse molaire moyenne en nombre du prépolymère O-BP2 mesurée par chromatographie d'exclusion stérique dans le N,N-diméthylformamide est de 8400 g.mol$^{-1}$, avec un indice de polydispersité de 1,2.

**Exemple 4**

Préparation du prépolymère O-BP/BHPB5 de masse molaire 5000 g.mol$^{-1}$ :

La synthèse du prépolymère O-BP/BHPB5 est effectuée par polycondensation de 4,4'-dichlorodiphénylsulfone, de 4,4'-dihydroxybiphényle, de diphénol BHPB et du monomère mono-fonctionnel CPEDPS, suivant un procédé analogue à celui de l'exemple 3. Les unités récurrentes du prépolymère sont formées de 50% de 4,4'-dihydroxybiphényle et 50% de BHPB. Le schéma réactionnel est le suivant.

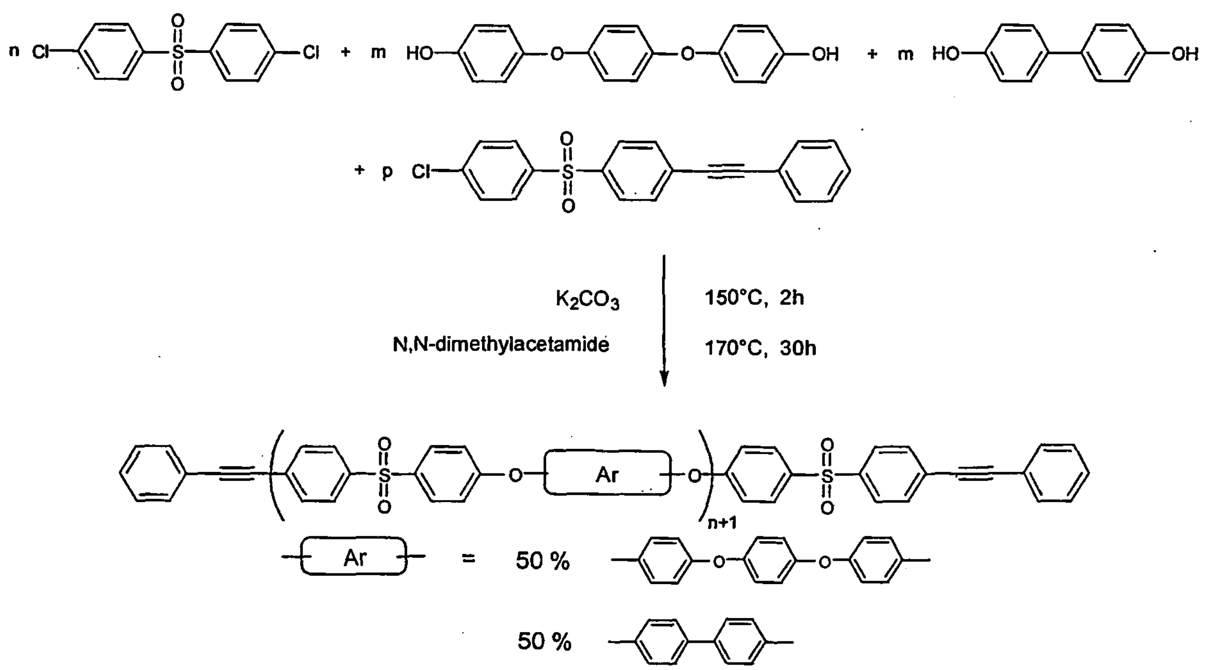


On a introduit 3,7541 g (20,16 mmol) de 4,4'-dihydro-xybiphényle, 5,9334 g (20,16 mmol) de 1,4-bis(p-hydroxyphénoxy)benzène, 6,687 g (48,3 mmol) de carbonate de potassium et 4 mL de N,N-diméthylacétamide (ce qui correspond à une concentration en monomères diphénol de 30% en masse) dans un ballon tricol de 250 mL muni d'une agitation mécanique, d'un Dean-Stark surmonté d'un réfrigérant et balayé par un courant d'azote. On a ajouté 10 mL de toluène à ce mélange, puis on l'a porté à 150°C, et on a maintenu cette température pendant 2 heures afin d'éliminer l'eau par distillation azéotropique.

On a ajouté ensuite 10,4301 g (36,32 mmol) de 4,4'-dichlorodiphénylsulfone et 33 mL de N,N-diméthylacétamide afin de réduire la concentration à 20% en masse de réactifs. La solution a ensuite été agitée pendant'20 heures à 170°C après que le Dean-Stark ait été remplacé par un col de cygne.

Finalement on a ajouté 4,2341 g (12 mmol) de 4-chloro-(4'-phényléthynyl)diphénylsulfone et 17 mL de N,N-diméthyl-acétamide afin de maintenir la concentration à 20% en masse, et on a agité la solution pendant 10 heures à 200°C.

Le prépolymère a été extrait par précipitation dans l'eau permutée. Après filtration sur fritté, rinçage à l'eau permutée puis à l'acétone, pour éliminer l'excès de 4-chloro-(4'-phényléthynyl)diphénylsulfone, le prépolymère (20 g) a été séché à l'étuve à 100°C sous vide.

Les quantités des réactifs ont été déterminées de la façon suivante. Le nombre de motifs de répétition peut être déterminé en considérant la structure du prépolymère polysulfone répondant à la formule

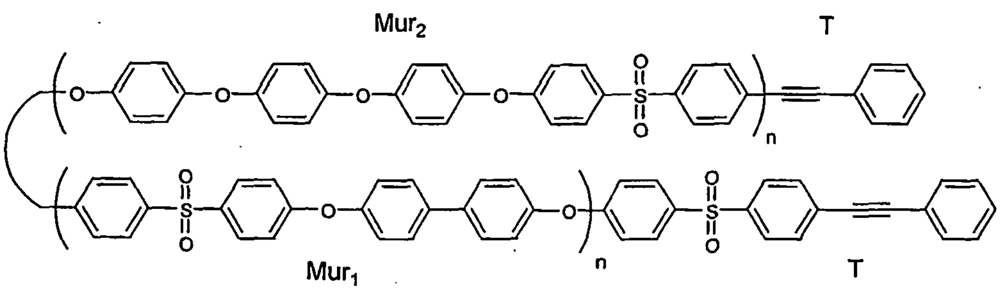

et à partir de la relation (II) $M_0 = n \times (M_{ur1} + M_{ur2}) + T$ dans laquelle $M_{ur1}$ et $M_{ur2}$ représentent respectivement la masse molaire de l'unité récurrente BP (400,454 $g.mol^{-1}$) et la masse molaire de l'unité récurrente BHBP (508,551 $g.mol^{-1}$), T représente la masse molaire des extrémités de chaînes (418,513 $g.mol^{-1}$) et $M_0$ représente la masse molaire prédéfinie du prépolymère. Si l'on désigne par $N_0$ le nombre de moles de prépolymère souhaité, $N_o$ étant défini par la relation $No = m_0/M_0$, $m_0$ étant la masse du prépolymère, alors le nombre $n_r$ respectif de moles de chaque réactif peut être déterminé à partir des relations résumées dans le tableau VI ci-dessous.

**Tableau VI**

| Réactif | nombre de moles |
|---|---|
| 4,4'-dichlorodiphénylsulfone | $n_r = N_0(n-1)$ |
| 4,4'-dihydroxybiphényle | $n_r = nN_0$ |
| 1,4-bis(p-hydroxyphénoxy)benzène | $n_r = nN_0$ |
| 4-chloro-(4'-phényléthynyl)diphénylsulfone (1,5 eq) | $n_r = 1,5 \times 2N_0$ |
| carbonate de potassium (1,2 eq) | $n_r = 1,2 \times nN_0$ |

Caractérisation du prépolymère O-BP/BHPB5

La caractérisation du prépolymère O-BP/BHPB5 a été réalisée par spectroscopie RMN $^1H$, $^{13}C$ et DEPT.

La figure 8 représente le spectre $^1H$-RMN du prépolymère O-BP/BHPB5.

La figure 9 représente le spectre $^{13}C$-RMN du prépolymère O-BP/BHPB5 à sa partie supérieure, et le spectre DEPT à sa partie inférieure.

Lesdits spectres sont en accord avec la structure attendue. L'analyse de ces spectres permet de considérer que les chaînes macromoléculaires sont très majoritairement terminées par un motif phénylacétylène et que le rapport des valeurs d'intégrale correspondant à chaque diphénol, est conforme à la proportion 50/50 fixée initialement.

La masse molaire du prépolymère O-BP/BHPB5, mesurée à partir du spectre RMN $^1H$, est de 3600 $g.mol^{-1}$. Cette valeur a été déterminée selon le protocole décrit dans l'exemple 3 (à l'aide de la relation (II) donnée précédemment). La masse molaire moyenne en nombre mesurée par chromatographie d'exclusion stérique dans le N,N-diméthylformamide est de 21700 $g.mol^{-1}$, avec un indice de polymolécularité de 1,4.

**Exemple 5**

Préparation du prépolymère O-BP/BHPB10 de masse molaire 10000 $g\text{-}mol^{-1}$ :

La synthèse du prépolymère O-BP/BHPB10 a été effectuée selon le mode opératoire de l'exemple 4, en modifiant les quantités de réactifs utilisées.

On a introduit 3,9255 g (21,08 mmol) de 4,4'-dihydroxybiphényle, 6,2044g (21,08 mmol) de 1,4-bis(p-hydroxyphénoxy)benzène, 6,9927 g (50,59 mmol) de carbonate de potassium et 50 mL de N,N-diméthylacétamide (la solution a une concentration en monomères diphénol de 30% en masse) dans un ballon tricol de 250 mL muni d'une agitation mécanique, d'un Dean-Stark surmonté d'un réfrigérant et balayé par un courant d'azote. On a ajouté 10 mL de toluène à ce mélange, puis on l'a porté à 150°C, et on a maintenu cette température pendant 2 heures afin d'éliminer l'eau par distillation azéotropique.

On a ajouté ensuite 11,5333 g (40,16 mmol) de 4,4'-dichlorodiphénylsulfone et 36 mL de N,N-diméthylacétamide afin de réduire la concentration à 20% en masse de réactifs. La solution a ensuite été agitée pendant 20 heures à 170°C après que le Dean-Stark ait été remplacé par un col de cygne.

Finalement on a ajouté 2,1170 g (6 mmol) de 4-chloro-(4'-phényléthynyl)diphénylsulfone et 7 mL de N,N-diméthyl-acétamide afin de maintenir la concentration à 20% en masse, et on a agité la solution pendant 10 heures à 200°C.

Le prépolymère a été extrait par précipitation dans l'eau permutée. Après filtration sur fritté, rinçage à l'eau permutée puis à l'acétone, pour éliminer l'excès de 4-chloro-(4'-phényléthynyl)diphénylsulfone, le prépolymère (20 g) a été séché à l'étuve à 100°C sous vide.

Caractérisation du prépolymère O-BP/BHPB10

La caractérisation du prépolymère O-BP/BHPB10 a été réalisée par spectroscopie RMN $^1H$, $^{13}C$ et DEPT.

La figure 10 représente le spectre $^1H$-RMN du BP/BHPB10.

La figure 11 représente le spectre $^{13}C$-RMN du BP/BHPB10 à sa partie supérieure, et le spectre DEPT à sa partie inférieure.

Lesdits spectres sont en accord avec la structure attendue. L'analyse de ces spectres permet de considérer que les chaînes macromoléculaires sont très majoritairement terminées par un motif phénylacétylène et que le rapport des valeurs d'intégrale correspondant à chaque diphénol, est conforme à la proportion 50/50 fixée initialement.

La masse molaire du prépolymère O-BP/BHPB10, mesurée à partir du spectre RMN $^1H$, est de 6400 g.mol$^{-1}$. Cette valeur a été déterminée selon le protocole décrit dans l'exemple 4. La masse molaire moyenne en nombre mesurée par chromatographie d'exclusion stérique dans le N,N-diméthylformamide est de 29900 g.mol$^{-1}$, avec un indice de polymolécularité de 1,6.

**Exemple 6**

Extrusion du prépolymère O-BP2

Cet exemple a été réalisé en utilisant un prépolymère obtenu selon le mode opératoire de l'exemple 3.

L'extrusion a été effectuée à l'aide d'une extrudeuse commercialisée sous la marque Microcompounder par la société DACA. Le corps de l'extrudeuse est formé par 2 plaques similaires s'assemblant entre elles. La figure 12 représente une vue partielle de face de l'une des plaques (5) quand l'extrudeuse est ouverte pour son nettoyage. Elle comprend un fourreau (1) dans lequel sont placées deux vis coniques contrarotatives (2, 2'), des cartouches chauffantes insérées dans les deux plaques de manière à maintenir une température homogène dans le fourreau (non représenté), un capteur de température (non représenté), un capteur de couple (non représenté), une vanne à deux positions (3), une filière interchangeable 4, et un canal (6) reliant la partie inférieure à la partie supérieure du fourreau. Le volume du fourreau (1) est de 4,5 cm$^3$.

Les 2 vis coniques contrarotatives (2, 2') ont une longueur de 100 mm et un diamètre maximal de 10 mm. Leur vitesse de rotation peut varier de 0 à 360 tours par minute. Dans le présent exemple, la vitesse était de 100 tours par minute, ce qui représente un cisaillement moyen d'environ 1500 s$^{-1}$, c'est-à-dire un cisaillement représentatif des conditions industrielles d'extrusion.

La vanne à 2 positions (3) peut être soit en position 'Recyclage', qui permet au matériau en bout de vis de remonter pour entrer à nouveau dans le fourreau, soit en position 'Extrusion', pour faire sortir le matériau à travers la filière.

La filière interchangeable (4) utilisée dans le présent exemple est une filière axisymétrique de diamètre 2 mm. Dans l'extrudeuse Microcompounder, l'extrusion est effectuée dans les conditions suivantes. Les plaques de l'extrudeuse sont régulées à une température Te donnée. Le mélange à extruder est placé dans une trémie d'alimentation, et poussé par un piston dans le fourreau. À l'intérieur du fourreau, les deux vis mélangent et fondent le matériau, et le forcent vers le bas. Quand le matériau atteint le bas du fourreau, il remonte par le canal extérieur (6) puis entre à nouveau dans le fourreau pour être mélangé. Ce processus peut être répété plusieurs fois, pendant une durée De. La température du prépolymère est mesurée en temps réel par le capteur de température. Un capteur de couple (non représenté) mesure la résistance Re engendrée par le matériau pendant la rotation des vis, dans la gamme de 0 à 5 N.m. À la fin du procédé de mélange, la vanne est tournée en position extrusion, afin de faire sortir le matériau à travers la filière (4).

La figure 13 représente le thermogramme DSC du prépolymère. Elle montre que la température de transition vitreuse du prépolymère O-BP2, mesurée par DSC, est de 162°C.

Pour qu'un composé soit extrudable, il faut que sa viscosité soit suffisamment faible pour que le composé coule à la température d'extrusion. La viscosité du prépolymère O-BP2 a été mesurée par rhéométrie dynamique avec un rhéomètre ARES de la société Rheometrics, sur une gamme de température de 200 à 260°C et pour des gradients de cisaillements compris entre $10^{-1}$ et $10^2$ s$^{-1}$.

La figure 14 représente les courbes de viscosité en fonction de la fréquence de sollicitation. Pour chaque température de 200°C à 260°C, la viscosité varie peu en fonction de la fréquence : cette zone de comportement est appelée 'plateau newtonien'. Ces courbes montrent que, pour les cisaillements étudiés, la viscosité du prépolymère O-BP2 est égale à 4000 Pa.s à 200°C et pour des températures supérieures à 220°C, la viscosité est inférieure à 300 Pa.s à $10^2$ s$^{-1}$, ce qui est très faible. Le mélange peut donc être extrudé.

Pour valider la faisabilité du procédé, des essais d'extrusion du composé ont été réalisés avec le Microcompounder décrit précédemment. L'extrusion a été effectuée avec 3,3 g de mélange, avec une température de plaques Te de 200°C, et une durée De de 5 min.

La température du prépolymère O-BP2, mesurée en temps réel par le capteur de température, est restée à 200°C, ce qui signifie que le mélange ne s'est pas échauffé. Le couple mesuré était de 3,9 N.m, ce qui veut dire que le matériau est visqueux. À la fin du procédé de mélange, la vanne a été tournée en position extrusion, afin de faire sortir le matériau à travers la filière. L'extrudat obtenu est lisse et sans défaut.

**Exemple 7**

Extrusion du prépolymère O-BP/BHPB5 de masse molaire 5000 g.mol$^{-1}$ :

Cet exemple a été réalisé en utilisant un prépolymère O-BP/BHPB5 obtenu selon le mode opératoire de l'exemple 4.

La figure 15 représente le thermogramme DSC du prépolymère. Elle montre que la température de transition vitreuse du prépolymère O-BP/BHPB5, mesurée par DSC, est de 166°C.

La viscosité du prépolymère O-BP/BHPB5 a été mesurée par rhéométrie dynamique avec un rhéomètre ARES de la société Rheometrics, sur une gamme de température de 200 à 240°C et pour des gradients de cisaillements compris entre $10^{-1}$ et $10^2$ $s^{-1}$. La figure 16 représente les courbes de viscosité en fonction de la fréquence de sollicitation en abscisse. Ces courbes montrent que, pour les cisaillements étudiés, la viscosité du prépolymère O-BP/BHPB5 est inférieure à 20000 Pa.s à 200°C. Pour des températures supérieures à 220°C, la viscosité est inférieure à 1000 Pa.s à $10^2$ $s^{-1}$.

A partir de ces mesures de viscosité, le comportement du mélange en extrusion a été prévu par le principe de la superposition temps-température. La superposition, basée sur le principe d'équivalence temps-température, consiste à translater les courbes d'écoulement obtenues à différentes températures d'un facteur déterminé empiriquement. Pour une température fixée, appelée température de référence, on obtient alors le comportement du matériau en écoulement sur une large gamme de fréquence.

La figure 17 montre le comportement du prépolymère à la température de référence de 240°C. En ordonnée à gauche, $\eta^*$ représente la viscosité, et en abscisse, $\omega$ représente la fréquence de sollicitation de l'échantillon. Les courbes en trait fin représentent le module élastique ou module de conservation G' et le module visqueux ou module de perte G", que l'on peut lire en ordonnée à droite. Les courbes en trait gras représentent la viscosité $\eta^*$. A 240°C, le mélange est rhéofluidisant, et sa viscosité est inférieure à 100 Pa.s, ce qui est très faible, pour des gradients représentatifs du procédé d'extrusion, de $10^4$ $s^{-1}$. Le mélange peut donc être extrudé.

Pour valider la faisabilité du procédé, des essais d'extrusion du composé ont été réalisés avec le Microcompounder décrit précédemment. L'extrusion a été effectuée avec 2,0 g de mélange, avec une température de plaques Te de 200°C, et une durée De de 5 min.

La température du prépolymère O-BP/BHPB5, mesurée en temps réel par le capteur, de température, est restée à 200°C, ce qui signifie que le mélange ne s'est pas échauffé. Le couple mesuré était de 4,1 N.m, ce qui veut dire que le matériau est très visqueux. À la fin du procédé de mélange, la vanne a été tournée en position extrusion, afin de faire sortir le matériau à travers la filière. L'extrudat obtenu est lisse et sans défaut.

**Exemple 8**

<u>Extrusion du prépolymère O-BP/BHPB10 de masse molaire 10000 $g.mol^{-1}$</u>

Cet exemple a été réalisé en utilisant un prépolymère O-BP/BHPB10 obtenu selon le mode opératoire de l'exemple 5.

La figure 18 représente le thermogramme DSC du prépolymère O-BP/BHPB10. Elle montre que la température de transition vitreuse du prépolymère O-BP/BHPB10, mesurée par DSC, est de 175°C.

La viscosité du prépolymère O-BP/BHPB10 a été mesurée par rhéométrie dynamique avec un rhéomètre ARES de la société Rheometrics, sur une gamme de température de 200 à 300°C et pour des gradients de cisaillement compris entre $10^{-1}$ et $10^2$ $s^{-1}$. La figure 19 représente les courbes de viscosité en fonction de la fréquence de sollicitation en abscisse. Ces courbes montrent que, pour les cisaillements étudiés, la viscosité du prépolymère O-BP/BHPB10 est inférieure à 10000 Pa.s pour des températures supérieures à 220°C.

Le comportement du mélange en extrusion a été prévu par le principe de la superposition temps-température à partir de ces mesures de viscosité, de la même manière que dans l'exemple 7. La figure 20 montre le comportement du mélange à la température de référence de 300°C. En ordonnée à gauche, $\eta^*$ représente la viscosité, et en abscisse, $\omega$ représente la fréquence de sollicitation de l'échantillon. Les courbes en trait fin représentent le module élastique ou module de conservation G' et le module visqueux ou module de perte G", que l'on peut lire en ordonnée à droite. Les courbes en trait gras représentent la viscosité $\eta^*$. A 300°C, le mélange est rhéofluidisant, et sa viscosité est proche de 20 Pa.s, ce qui est très faible, pour des gradients représentatifs du procédé d'extrusion, de $10^4$ $s^{-1}$. Le mélange peut donc être extrudé.

Pour valider la faisabilité du procédé, des essais d'extrusion du composé ont été réalisés avec le Microcompounder décrit précédemment. L'extrusion a été effectuée avec 2,8 g de mélange, avec une température de plaques Te de 240°C, et une durée De de 5 min.

La température du prépolymère O-BP/BHPB10, mesurée en temps réel par le capteur de température, est restée à 240°C, ce qui signifie que le mélange ne s'est pas échauffé. Le couple mesuré était de 3,3 N.m, ce qui veut dire que le matériau coule. À la fin du procédé de mélange, la vanne a été tournée en position extrusion, afin de faire sortir le matériau à travers la filière. L'extrudat obtenu est lisse et sans défaut.

**Exemple 9**

Thermoréticulation

Un échantillon de chacun des films obtenus par extrusion selon les exemples 6 à 8 a été porté à 320°C et maintenu à cette température pendant 3 heures pour obtenir la réticulation par les groupements éthynyle.

**Exemple 10**

Sulfonation dans le dichloroéthane, de films réticulés obtenus à partir de BP/BHPB5 et de O-BP/BHPB10.

Dans une première étape, un film de 100 $cm^2$ et d'une épaisseur de 100 $\mu$m séché préalablement à 110°C sous vide (10 mbar) a été immergé dans 200 ml de dichloroéthane (DCE) et l'ensemble est porté à 60°C. Parallèlement, on a préparé une solution anhydre de chlorosulfonate de triméthylsilyle en dissolvant dans 50 ml de DCE sec sous agitation magnétique et sous argon, 47,2 g (0,434 moles) de chlorure de triméthylsilane et 42,2 g (0,36 moles) de $ClSO_3H$, tous les constituants étant anhydres, pendant une durée de 30 min, HCl formé étant piégé.
Au cours d'une deuxième étape, on a introduit la solution de chlorosulfonate dans le DCE contenant le film, et on a maintenu le milieu réactionnel pendant 2 h à 60°C.
Ensuite, on a retiré le film de la solution, on l'a lavé trois fois au dichloroéthane. Ensuite, on a évaporé le résidu du dichloroéthane sous vide à 50°C pendant 2 heures. Finalement, on a trempé le film sulfoné dans de l'eau distillée.
Les résultats électrochimiques ont été obtenus par des mesures d'impédance en appliquant une tension sinusoïdale de faible amplitude à une cellule électrochimique, autour de sa tension d'équilibre. La conductivité protonique du film de polysulfone sulfoné acide, mesurée à 20°C et 90% d'humidité, est égale à 1 $mS.cm^{-1}$.

**Exemple 11.**

Sulfonation dans le nitroéthane, de films réticulés obtenus à partir de BP/BHPB5 ou O-BP/BHPB10

Un film de 100 $cm^2$ d'une épaisseur de 100 $\mu$m séché préalablement à 110°C sous vide (10 mbar) est immergé dans 200 ml de nitroéthane (NE), et l'ensemble est porté à 40°C pendant 20 min.
Ensuite, 16 ml d'acide chlorosulfonique sont ajoutés et le milieu réactionnel est maintenu à 40°C sous faible agitation.
Après 30 min d'agitation, le film est retiré de la solution, lavé trois fois au nitroéthane, et ensuite le résidu de solvant est évaporé sous vide à 50°C pendant 2 heures.
Finalement, le film sulfoné est trempé dans de l'eau distillée.
Les résultats électrochimiques sont obtenus par des mesures d'impédance en appliquant une tension sinusoïdale de faible amplitude à une cellule électrochimique, autour de sa tension d'équilibre. La conductivité protonique du film de polysulfone sulfoné acide, mesurée à 20°C et 90% d'humidité, est égale à 1,2 $mS.cm^{-1}$.

**Revendications**

1. Procédé pour la préparation d'un film constitué par un matériau polymère réticulé portant des groupements ioniques comprenant une partie anionique fixée sur le polymère, et un cation $M^{p+}$ choisi parmi le proton, les ions de métal monovalent, de métal divalent ou de métal trivalent, et les ions organiques choisis parmi les ions ammonium, imidazolium, pyrazolium, tétrazolium, pyridinium, et guanidinium, ledit procédé comprenant les étapes consistant à extruder un matériau polymère initial contenant au moins un prépolymère, à polymériser ledit matériau polymère après extrusion, et à soumettre le matériau extrudé à une réaction chimique pour greffer des groupements ioniques, ledit procédé étant **caractérisé en ce que** :

    - le prépolymère comprend des unités récurrentes comprenant chacune un ou plusieurs groupements aromatiques GA et un ou plusieurs groupements fonctionnels GF ;
    - le prépolymère porte un ou plusieurs groupements GP polymérisables par voie thermique à une température supérieure à la température d'extrusion, ou par voie photochimique ;
    - le prépolymère porte un ou plusieurs groupements réactifs GR permettant le greffage de groupements ioniques ;
    - dans une unité récurrente comprenant plusieurs groupements aromatiques GA et/ou plusieurs groupements fonctionnels GF, les groupements aromatiques peuvent être identiques ou différents, et les groupements fonctionnels GF peuvent être identiques ou différents.

2. Procédé selon la revendication 1, **caractérisé en ce que** le squelette du prépolymère est formé par des unités récurrentes (GA,GF) formant une seule chaîne, ou par des unités récurrentes (GA,GF) formant une chaîne principale et des chaînes latérales, lesdites unités récurrentes étant identiques ou différentes.

3. Procédé selon la revendication 2, **caractérisé en ce qu'**un groupement GA d'une unité récurrente est un élément d'une chaîne principale et le cas échéant d'une chaîne latérale, et un groupement GF est soit un élément d'une chaîne, soit un substituant latéral d'un groupement GA.

4. Procédé selon la revendication 1, **caractérisé en ce qu'**un groupement aromatique GA d'une unité récurrente est choisi :

- dans le groupe constitué par le groupement phénylène non substitué $-C_6H_4-$, les groupements phénylène portant au moins un substituant, un groupement constitué par deux noyaux phénylène condensés ne portant pas de substituant ou portant au moins un substituant ; ou
- dans le groupe constitué par les noyaux hétéroaromatiques comprenant un ou plusieurs hétéroatomes choisis parmi N, O et S, lesdits groupements hétéroaromatiques portant éventuellement au moins un substituant ;

étant entendu que chacun des substituants d'un groupement phénylène ou d'un noyau hétéroaromatique représente indépendamment des autres un groupement alkyle, un groupement halogénoalkyle, un groupement alkényle, ou un groupement aromatique comprenant un ou plusieurs noyaux aromatiques condensés ou non et portant éventuellement un substituant.

5. Procédé selon la revendication 1, **caractérisé en ce qu'**un groupement fonctionnel GF est un groupement éther, un groupement alkylène ayant de 1 à 10 atomes de carbone, un groupement perfluoroalkylène ayant de 1 à 10 atomes de carbone, un carbonyle, un ester, un sulfure, une sulfone, un groupement oxazolyle, un groupement imidazolyle, un groupement amide ou un groupement imide.

6. Procédé selon la revendication 1, **caractérisé en ce qu'**un groupement GP est situé aux extrémités de la chaîne principale, et/ou le cas échéant sur des chaînes latérales.

7. Procédé selon la revendication 1, **caractérisé en ce qu'**un groupement GP est un groupement polymérisable par voie thermique.

8. Procédé selon la revendication 7, **caractérisé en ce que** le groupement GP est un groupement alcynyle répondant à la formule $-C{\equiv}C-R^2$, dans laquelle $R^2$ représente un groupement aromatique, un groupement alkyle ou un groupement perfluoroalkyle, le groupement alcynyle étant

- fixé directement sur le groupement aromatique GA d'une unité récurrente, l'extrémité concernée du prépolymère présentant alors la structure $-GA-C{\equiv}C-R^2$, ou
- fixé sur le groupement fonctionnel GF d'une unité récurrente par l'intermédiaire d'un groupement $-R^1-$ qui représente un groupement aromatique, un groupement alkylène ou un groupement perfluoroalkylène, et l'extrémité ou le substituant concernés du prépolymère présentant alors la structure $-GF-R^1-C{\equiv}C-R^2$.

9. Procédé selon la revendication 1, **caractérisé en ce que** GR est un groupement phénylène, et **en ce que** :

- le greffage de groupements ioniques sulfonate sur le film de polymère est effectué par réaction du film polymère avec le chlorosulfonate de triméthylsilyle ou l'acide chlorosulfonique, puis addition de $M^{p+}(OH^-)_p$, ou
- le greffage de groupements thiocarboxylate est effectué par réaction du film polymère avec le butyl lithium, puis addition successivement de $CS_2$, de $SOCl_2$, et de $M^{p+}(OH^-)_p$ ou
- le greffage de groupements dithiocarboxylate est effectué par réaction du film polymère avec le butyl lithium, puis addition successivement de $CS_2$, de HCl, et de $M^{p+}(OH^-)_p$.

10. Procédé selon la revendication 1, **caractérisé en ce que** GR est un groupement OH porté par un groupement aromatique GA et **en ce que** :

- le groupement OH est transformé en groupement ionique sulfate par réaction du film polymère avec $ClSO_3H$,

puis addition de $M^{p+}(OH^-)_p$, ou
- le groupement OH est transformé en un groupement ionique phénate par réaction du film polymère avec $M^{p+}(OH^-)_p$.

**11.** Procédé selon la revendication 1, **caractérisé en ce que** GR est :

- un groupement méthyle, et le greffage d'un groupement ionique carboxylate est effectué par réaction du film polymère avec $KMnO_4$, puis addition de $M^{p+}(OH^-)_p$, ou
- un groupement $-CH_2-X$ dans lequel X est un halogène, et le greffage d'un groupement ionique phosphonate est effectué par réaction avec $P(OCH_3)_3$, puis addition de $M^{p+}(OH^-)_p$.

**12.** Procédé selon la revendication 1, **caractérisé en ce que** GR est un groupement sulfonate $-SO_3(1/p)M^{p+}$, et **en ce que** :

- le greffage d'un groupement sulfonylamidure est effectué par réaction du film polymère portant un groupement sulfonate avec $SOCl_2$ ou $PCl_5$, puis successivement avec $R^6NH_2$ et $M^{p+}(OH^-)_p$, $R^6$ représentant un hydrogène, un groupement alkyle ayant de préférence de 1 à 6 atomes de carbone, un groupement alkyle partiellement fluoré ayant de préférence de 1 à 6 atomes de carbone, un groupement alkényle ayant de préférence de 1 à 4 atomes de carbone, un groupement alkényle partiellement fluoré ayant de préférence de 1 à 4 atomes de carbone, un groupement oxyalkylène $CH_3-(O-(CH_2)_m)_n$ dans lequel de préférence $2 \leq m < 5$ et $1 \leq n \leq 10$, ou un groupement aryle comprenant un ou plusieurs noyaux aromatiques condensés ou non et portant éventuellement un substituant, ou
- le greffage d'un groupement sulfonylimidure est effectué par réaction du film polymère portant un groupement sulfonate avec $SOCl_2$ ou $PCl_5$, puis successivement avec $R^7SO_2NH^-(1/p)M^{p+}$ et de $M^{p+}(OH^-)_p$ $R^7$ étant un groupement alkyle, un groupement alkyle perfluoré ou partiellement fluoré, un groupement alkényle perfluoré ou partiellement fluoré, un groupement oxyalkylène $CH_3-(O-(CH_2)_m)_n$ dans lequel $2 \leq m < 5$ et $1 \leq n \leq 10$, ou un groupement aryle comprenant un ou plusieurs noyaux aromatiques condensés ou non et portant éventuellement un substituant.

**13.** Procédé selon la revendication 1, **caractérisé en ce que** le groupement GP est un groupement thermopolymérisable, et l'extrusion est effectuée à une température inférieure à la température de polymérisation.

**14.** Procédé selon la revendication 1, **caractérisé en ce que** GP est :

- un groupement thermopolymérisable, et le film de prépolymère obtenu après extrusion est soumis à un traitement thermique qui consiste à placer le film dans un four dès sa sortie de l'extrudeuse, ou
- un groupement photoréticulable, et le film de prépolymère obtenu après extrusion est soumis soit une irradiation UV dans la plage 200-400 nm avec une intensité de 5-150 $mW/cm^2$, soit à un faisceau d'électrons.

**15.** Procédé selon la revendication 1, **caractérisé en ce que** les groupements ioniques sont introduits dans le film obtenu après extrusion et polymérisation, par un procédé comprenant les étapes suivantes :

• on fait gonfler le film polymérisé par un solvant anhydre,
• on met en contact ledit film gonflé avec une solution dans un solvant anhydre d'un réactif précurseur du groupement ionique, sous agitation,
• on extrait le film de la solution et on le lave à l'eau pure, on le sèche sous vide, puis on le trempe dans l'eau distillée en vue de sa conservation.

**16.** Procédé selon la revendication 1, dans lequel on introduit des groupements ioniques $-SO_3(1/p)M^{p+}$ dans un film sec obtenu par réticulation d'un prépolymère polysulfone comprenant des groupements GP terminaux du type alcynyle et dont les groupements réactifs GR sont constitués par certains des groupements GA, par un procédé comprenant les étapes suivantes :

• Gonflement du film sec par un solvant anhydre ;
• Préparation d'une solution anhydre de chlorosulfonate de triméthylsilyle ou d'acide chlorosulfonique dans le solvant anhydre choisi ;
• Mise en contact du film gonflé obtenu à la 1ère étape avec la solution préparée au cours de la 2ème étape ;
• lavage du film par le solvant pur utilisé dans la 1ère étape ;

• séchage du film sulfoné sous vide dynamique, à une température comprise entre 40 et 80°C.
• trempage du film dans l'eau distillée.

**17.** Utilisation d'un film obtenu par le procédé tel que défini selon l'une des revendications 1 à 16, constitué par un polymère réticulé comprenant des unités récurrentes (GA, GR) portant des groupements ioniques, et dans lequel le cation des groupements ioniques est un ion lithium, comme électrolyte d'une batterie au lithium, d'un supercondensateur ou d'un dispositif électrochrome.

**18.** Utilisation d'un film obtenu par le procédé tel que défini selon l'une des revendications 1 à 16, constitué par un polymère réticulé comprenant des unités récurrentes (GA, GR) portant des groupements ioniques, et dans lequel le cation des groupements ioniques est choisi parmi les ions ammonium, imidazolium, pyrazolium, tétrazolium, pyridinium, et guanidinium, comme membrane pour une pile à combustible, comme membrane échangeuse d'ions ou comme membrane d'électrodialyse.

**Patentansprüche**

**1.** Verfahren zur Herstellung einer Folie aus einem vernetzten Polymermaterial mit ionischen Gruppen, umfassend einen an das Polymer gebundenen anionischen Teil und ein Kation $M^{p+}$, ausgewählt aus dem Proton, Ionen von einwertigem Metall, von zweiwertigem Metall oder von dreiwertigem Metall und organischen Ionen, ausgewählt aus Ammonium-, Imidazolium-, Pyrazolium-, Tetrazolium-, Pyridinium- und Guanidiniumionen, wobei das Verfahren Schritte umfasst, die daraus bestehen, dass man ein Polymerausgangsmaterial, das mindestens ein Prepolymer enthält, extrudiert, das Polymermaterial nach der Extrusion polymerisiert und das extrudierte Material einer chemischen Reaktion zur Aufpfropfung von ionischen Gruppen unterwirft, wobei das Verfahren **dadurch gekennzeichnet ist, dass**:

- das Prepolymer Wiederholungseinheiten umfasst, die jeweils eine oder mehrere aromatische Gruppen GA und eine oder mehrere funktionelle Gruppen GF umfassen;
- das Prepolymer eine oder mehrere polymerisierbare Gruppen GP umfasst, die bei einer über der Extrusion Temperatur liegenden Temperatur auf thermischem Wege oder auf photochemischem Wege polymerisierbar sind;
- das Prepolymer eine oder mehrere reaktive Gruppen GR umfasst, die die Aufpfropfung von ionischen Gruppen erlauben;
- in einer Wiederholungseinheit, die mehrere aromatische Gruppen GA und/oder mehrere funktionelle Gruppen GF umfasst, die aromatischen Gruppen gleich oder verschieden sein können und die funktionellen Gruppen GF gleich oder verschieden sein können.

**2.** Verfahren nach Anspruch 1, **dadurch gekennzeichnet, dass** das Gerüst des Prepolymers durch Wiederholungseinheiten (GA, GF), die eine einzige Kette bilden, oder durch Wiederholungseinheiten (GA, GF), die eine Hauptkette und Seitenketten bilden, gebildet wird, wobei die Wiederholungseinheiten gleich oder verschieden sind.

**3.** Verfahren nach Anspruch 2, **dadurch gekennzeichnet, dass** eine Gruppe GA einer Wiederholungseinheit ein Element einer Hauptkette und gegebenenfalls einer Seitenkette ist und eine Gruppe GF entweder ein Element einer Kette oder ein Seitensubstituent einer Gruppe GA ist.

**4.** Verfahren nach Anspruch 1, **dadurch gekennzeichnet, dass** eine aromatische Gruppe GA einer Wiederholungseinheit ausgewählt ist:

- aus der Gruppe bestehend aus der unsubstituierten Phenylengruppe $-C_6H_4-$, Phenylengruppen, die mindestens einen Substituenten tragen, und einer Gruppe, die aus zwei kondensierten Phenylenkernen, die keinen Substituenten oder mindestens einen Substituenten tragen, besteht; oder
- aus der Gruppe bestehend aus heteroaromatischen Kernen mit einem oder mehreren aus N, O und S ausgewählten Heteroatomen, wobei die heteroaromatischen Gruppen gegebenenfalls mindestens einen Substituenten tragen;

mit der Maßgabe, dass jeder der Substituenten einer Phenylengruppe bzw. eines heteroaromatischen Kerns unabhängig von den anderen für eine Alkylgruppe, eine Halogenalkylgruppe, eine Alkenylgruppe oder eine aromatische Gruppe, die einen oder mehrere kondensierte oder nicht kondensierte aromatische Kerne umfasst und gegebenenfalls einen Substituenten trägt, steht.

5. Verfahren nach Anspruch 1, **dadurch gekennzeichnet, dass** es sich bei der funktionellen Gruppe GF um eine Ethergruppe, eine Alkylengruppe mit 1 bis 10 Kohlenstoffatomen, eine Perfluoralkylengruppe mit 1 bis 10 Kohlenstoffatomen, ein Carbonyl, einen Ester, ein Sulfid, ein Sulfon, eine Oxazolylgruppe, eine Imidazolylgruppe, eine Amidgruppe oder eine Imidgruppe handelt.

6. Verfahren nach Anspruch 1, **dadurch gekennzeichnet, dass** sich eine Gruppe GP an den Enden der Hauptkette und/oder gegebenenfalls an Seitenketten befindet.

7. Verfahren nach Anspruch 1, **dadurch gekennzeichnet, dass** es sich bei einer Gruppe GP um eine auf thermischem Wege polymerisierbare Gruppe handelt.

8. Verfahren nach Anspruch 7, **dadurch gekennzeichnet, dass** es sich bei der Gruppe GP um eine Alkinylgruppe der Formel $-C{\equiv}C-R^2$ handelt, wobei $R^2$ für eine aromatische Gruppe, eine Alkylgruppe oder eine Perfluoralkylgruppe steht, wobei die Alkinylgruppe

   - direkt an eine aromatische Gruppe GA einer Wiederholungseinheit gebunden ist und das betreffende Ende des Prepolymers dann die Struktur $-GA-C{\equiv}C-R^2$ aufweist oder
   - über eine Gruppe $-R^1-$, die für eine aromatische Gruppe, eine Alkylengruppe oder eine Perfluoralkylengruppe steht, an die funktionelle Gruppe GF einer Wiederholungseinheit gebunden ist und das betreffende Ende bzw. der betreffende Substituent des Prepolymers dann die Struktur $-GF-R^1-C{\equiv}C-R^2$ aufweist.

9. Verfahren nach Anspruch 1, **dadurch gekennzeichnet, dass** es sich bei GR um eine Phenylengruppe handelt und:

   - das Aufpfropfen von ionischen Sulfonatgruppen auf die Polymerfolie durch Reaktion der Polymerfolie mit Trimethylsilylchlorsulfonat oder Chlorsulfonsäure und anschließende Zugabe von $M^{p+}(OH^-)_p$ durchgeführt wird oder
   - das Aufpfropfen von Thiocarboxylatgruppen durch Reaktion der Polymerfolie mit Butyllithium und anschließende aufeinanderfolgende Zugabe von $CS_2$, $SOCl_2$ und $M^{p+}(OH^-)_p$ durchgeführt wird oder
   - das Aufpfropfen von Dithiocarboxylatgruppen durch Reaktion des Polymerfilms mit Butyllithium und anschließende aufeinanderfolgende Zugabe von $CS_2$, HCl und $M^{p+}(OH^-)_p$ durchgeführt wird.

10. Verfahren nach Anspruch 1, **dadurch gekennzeichnet, dass** es sich bei GR um eine OH-Gruppe an einer aromatischen Gruppe GA handelt und:

   - die OH-Gruppe durch Reaktion der Polymerfolie mit $ClSO_3H$ und anschließende Zugabe von $M^{p+}(OH^-)_p$ in eine ionische Sulfatgruppe umgewandelt wird oder
   - die OH-Gruppe durch Reaktion der Polymerfolie mit $M^{p+}(OH^-)_p$ in eine ionische Phenatgruppe umgewandelt wird.

11. Verfahren nach Anspruch 1, **dadurch gekennzeichnet, dass** es sich bei GR um:

   - eine Methylgruppe handelt und das Aufpfropfen einer ionischen Carboxylatgruppe durch Reaktion der Polymerfolie mit $KMnO_4$ und anschließende Zugabe von $M^{p+}(OH^-)_p$ durchgeführt wird oder
   - um eine Gruppe $-CH_2-X$, in der X für ein Halogen steht, handelt und das Aufpfropfen einer ionischen Phosphonatgruppe durch Reaktion mit $P(OCH_3)_3$ und anschließende Zugabe von $M^{p+}(OH^-)_p$ durchgeführt wird.

12. Verfahren nach Anspruch 1, **dadurch gekennzeichnet, dass** es sich bei GR um eine Sulfonatgruppe $-SO_3(1/p)M^{p+}$ handelt und:

   - das Aufpfropfen einer Sulfonylamidgruppe durch Reaktion der eine Sulfonatgruppe tragenden Polymerfolie mit $SOCl_2$ oder $PCl_5$ und dann nacheinander mit $R^6NH_2$ und $M^{p+}(OH^-)_p$ durchgeführt wird, wobei $R^6$ für Wasserstoff, eine Alkylgruppe mit vorzugsweise 1 bis 6 Kohlenstoffatomen, eine teilfluorierte Alkylgruppe mit vorzugsweise 1 bis 6 Kohlenstoffatomen, eine Alkenylgruppe mit vorzugsweise 1 bis 4 Kohlenstoffatomen, eine teilfluorierte Alkylengruppe mit vorzugsweise 1 bis 4 Kohlenstoffatomen, eine Oxyalkylengruppe $CH_3-(O-(CH_2)_m)_n$, in der vorzugsweise $2 \leq m < 5$ und $1 \leq n \leq 10$, oder eine Arylgruppe, die einen oder mehrere kondensierte oder nicht kondensierte aromatische Kerne umfasst und gegebenenfalls einen Substituenten trägt,

steht, oder
- das Aufpfropfen einer Sulfonylimidgruppe durch Reaktion der eine Sulfonatgruppe tragenden Polymerfolie mit $SOCl_2$ oder $PCl_5$ und dann nacheinander mit $R^7SO_2NH^-(1/p)M^{p+}$ und $M^{p+}(OH^-)_p$ durchgeführt wird, wobei $R^7$ für eine Alkylgruppe, eine perfluorierte oder teilfluorierte Alkylgruppe, eine perfluorierte oder teilfluorierte Alkenylgruppe, eine Oxyalkylengruppe $CH_3$-(O-$(CH_2)_m)_n$, in der $2 \leq m < 5$ und $1 \leq n \leq 10$, oder eine Arylgruppe, die einen oder mehrere kondensierte oder nicht kondensierte aromatische Kerne umfasst und gegebenenfalls einen Substituenten trägt, steht.

**13.** Verfahren nach Anspruch 1, **dadurch gekennzeichnet, dass** es sich bei der Gruppe GP um eine thermopolymerisierbare Gruppe handelt und die Extrusion bei einer unter der Polymerisationstemperatur liegenden Temperatur durchgeführt wird.

**14.** Verfahren nach Anspruch 1, **dadurch gekennzeichnet, dass** es sich bei GP um:

- eine thermopolymerisierbare Gruppe handelt und die nach der Extrusion erhaltene Prepolymerfolie einer Wärmebehandlung unterworfen wird, die daraus besteht, dass die Folie bei ihrem Austritt aus dem Extruder in einen Ofen platziert wird, oder
- eine photovernetzbare Gruppe handelt und die nach der Extrusion erhaltene Prepolymerfolie einer UV-Bestrahlung im Bereich von 200-400 nm mit einer Intensität von 5 bis 150 $mW/cm^2$ oder einem Elektronenstrahl unterworfen wird.

**15.** Verfahren nach Anspruch 1, **dadurch gekennzeichnet, dass** die ionischen Gruppen in die nach der Extrusion und Polymerisation erhaltene Folie durch ein Verfahren eingeführt werden, dass die folgenden Schritte umfasst:

• Quellen der Polymerfolie mit einem wasserfreien Lösungsmittel,
• Inberührungbringen der gequollenen Folie mit einer Lösung eines Reagens, das einen Vorläufer der ionischen Gruppe darstellt, in einem wasserfreien Lösungsmittel unter Rühren,
• Herausziehen der Folie aus der Lösung und Waschen der Folie mit reinem Wasser, Trocknen der Folie unter Vakuum, Eintauchen der Folie in destilliertes Wasser zur Konservierung.

**16.** Verfahren nach Anspruch 1, bei dem ionische Gruppen $-SO_3(1/p)M^{p+}$ in einen nach der Vernetzung eines Polysulfon-Prepolymers, das endständige Gruppen GP vom Alkinyl-Typ umfasst und dessen reaktive Gruppen GR aus einigen der Gruppen GA bestehen, erhaltenen trockenen Film durch ein Verfahren eingeführt werden, das die folgenden Schritte umfasst:

• Quellen der trockenen Folie mit einem wasserfreien Lösungsmittel;
• Herstellen einer wasserfreien Lösung von Trimethylsilylchlorsulfonat oder Chlorsulfonsäure in dem gewählten wasserfreien Lösungsmittel;
• Inberührungbringen der im 1. Schritt erhaltenen gequollenen Folie mit der im 2. Schritt hergestellten Lösung;
• Waschen der Folie mit dem im 1. Schritt verwendeten reinen Lösungsmittel;
• Trocknen der sulfonierten Folie unter dynamischem Vakuum bei einer Temperatur zwischen 40 und 80°C;
• Eintauchen der Folie in destilliertes Wasser.

**17.** Verwendung einer durch das Verfahren gemäß einem der Ansprüche 1 bis 16 erhaltenen Folie, die aus einem vernetzten Polymer, das ionische Gruppen tragende Wiederholungseinheiten (GA, GR) umfasst und in dem es sich bei dem Kation der ionischen Gruppen um ein Lithiumion handelt, besteht, als Elektrolyt einer Lithiumbatterie, eines Superkondensators oder einer elektrochromen Vorrichtung.

**18.** Verwendung einer durch das Verfahren gemäß einem der Ansprüche 1 bis 16 erhaltenen Folie, die aus einem vernetzten Polymer, das ionische Gruppen tragende Wiederholungseinheiten (GA, GR) umfasst und in dem das Kation der ionischen Gruppen aus Ammonium-, Imidazolium-, Pyrazolium-, Tetrazolium-, Pyridinium- und Guanidiniumionen ausgewählt ist, besteht, als Membran für eine Brennstoffzelle, als Ionenaustauschermembran oder als Elektrodialysemembran.

## Claims

**1.** Process for preparing a film composed of a crosslinked polymeric material bearing ionic groupings comprising an

anionic moiety which is attached to the polymer, and a cation $M^{p+}$ which is selected from the proton, ions of monovalent metal, of divalent metal or of trivalent metal, and organic ions selected from ammonium, imidazolium, pyrazolium, tetrazolium, pyridinium, and guanidinium ions, said process comprising the steps consisting in extruding an initial polymeric material comprising at least one prepolymer, in polymerizing said polymeric material after extrusion, and in subjecting the extruded material to a chemical reaction for grafting ionic groupings, said process being **characterized in that**:

• the prepolymer comprises repeating units each comprising one or more aromatic groups GA and one or more functional groups GF;
• the prepolymer bears one or more groups GP which are polymerizable thermally at a temperature greater than the extrusion temperature, or photochemically;
• the prepolymer bears one or more reactive groups GR which allow the grafting of ionic groupings;
• in a repeating unit comprising two or more aromatic groups GA and/or two or more functional groups GF, the aromatic groups may be identical or different, and the functional groups GF may be identical or different.

2. Process according to Claim 1, **characterized in that** the backbone of the prepolymer is formed by repeating units (GA, GF) which form a single chain, or by repeating units (GA, GF) which form a main chain and side chains, said repeating units of a prepolymer being identical or different.

3. Process according to Claim 2, **characterized in that** a group GA of a repeating unit is an element of a main chain and, where appropriate, of a side chain, and a group GF is either an element of a chain or a side substituent of a group GA.

4. Process according to Claim 1, **characterized in that** one aromatic group GA of a repeating unit is selected:

- from the group consisting of the unsubstituted phenylene group $-C_6H_4-$, phenylene groups bearing at least one substituent, a group composed of two fused phenylene nuclei bearing no substituent or bearing at least one substituent; or
- from the group consisting of heteroaromatic nuclei comprising one or more heteroatoms selected from N, O, and S, said heteroaromatic groups optionally bearing at least one substituent;

with the proviso that each of the substituents of a phenylene group or of a heteroaromatic nucleus represents, independently of the others, an alkyl group, a haloalkyl group, an alkenyl group, or an aromatic group comprising one or more nonfused or fused aromatic nuclei and optionally bearing a substituent.

5. Process according to Claim 1, **characterized in that** one functional group GF is an ether group, an alkylene group having 1 to 10 carbon atoms, a perfluoroalkylene group having 1 to 10 carbon atoms, a carbonyl, an ester, a sulfide, a sulfone, an oxazolyl group, an imidazolyl group, an amide group or an imide group.

6. Process according to Claim 1, **characterized in that** one group GP is situated at the ends of the main chain, and/or, where appropriate, on side chains.

7. Process according to Claim 1, **characterized in that** one group GP is a group which is polymerizable thermally.

8. Process according to Claim 8, **characterized in that** the group GP is an alkynyl group conforming to the formula $-C\equiv C-R^2$, in which $R^2$ represents an aromatic group, an alkyl group or a perfluoroalkyl group, the alkynyl group being

- attached directly to the aromatic group GA of a repeating unit, the relevant end of the prepolymer then having the structure $-GA-C\equiv C-R^2$, or
- attached to the functional group GF of a repeating unit via a group $-R^1-$ which represents an aromatic group, an alkylene group or a perfluoroalkylene group, and the relevant end or relevant substituent of the prepolymer then having the structure $-GF-R^1-C\equiv C-R^2$.

9. Process according to Claim 1, **characterized in that** GR is a phenylene group, and **in that**:

- the grafting of sulfonate ionic groupings on the polymeric film is performed by reacting the polymeric film with trimethylsilyl chlorosulfonate or chlorosulfonic acid, then adding $M^{p+}(OH^-)_p$, or
- the grafting of thiocarboxylate groupings is performed by reacting the polymeric film with butyllithium, then

successively adding $CS_2$, $SOCl_2$, and $M^{p+}(OH^-)_p$ or
- the grafting of dithiocarboxylate groupings is performed by reacting the polymeric film with butyllithium, then successively adding $CS_2$, HCl, and $M^{p+}(OH^-)_p$.

**10.** Process according to Claim 1, **characterized in that** GR is an OH group borne by an aromatic group GA and **in that**:

- the OH group is converted into sulfate ionic grouping by reacting the polymeric film with $ClSO_3H$, then adding $M^{p+}(OH^-)_p$, or
- the OH group is converted into a phenoxide ionic grouping by reacting the polymeric film with $M^{p+}(OH^-)_p$.

**11.** Process according to Claim 1, **characterized in that** GR is:

- a methyl group, and the grafting of a carboxylate ionic grouping is performed by reacting the polymeric film with $KMnO_4$, then adding $M^{p+}(OH^-)_p$, or
- GR is a group $-CH_2-X$ in which X is a halogen, and the grafting of a phosphonate ionic grouping is performed by carrying out reaction with $P(OCH_3)_3$, then adding $M^{p+}(OH^-)_p$.

**12.** Process according to Claim 1, **characterized in that** GR is a sulfonate group $-SO_3(1/p)M^{p+}$ and **in that**:

- the grafting of a sulfonylamide group is performed by reacting the polymeric film bearing a sulfonate group with $SOCl_2$ or $PCl_5$, then successively with $R^6NH_2$ and $M^{p+}(OH^-)_p$, $R^6$ representing a hydrogen, an alkyl group having preferably 1 to 6 carbon atoms, a partially fluorinated alkyl group having preferably 1 to 6 carbon atoms, an alkenyl group having preferably 1 to 4 carbon atoms, a partially fluorinated alkenyl group having preferably 1 to 4 carbon atoms, an oxyalkylene group $CH_3-(O-(CH_2)_m)_n$ in which preferably $2 \leq m < 5$ and $1 \leq n \leq 10$, or an aryl group comprising one or more fused or nonfused aromatic nuclei and optionally bearing a substituent, or
- the grafting of a sulfonylimide group is performed by reacting the polymeric film bearing a sulfonate group with $SOCl_2$ or $PCl_5$, then successively with $R^7SO_2NH^-(1/p)M^{p+}$ and $M^{p+}(OH^-)_p$, $R^7$ being an alkyl group, a perfluorinated or partially fluorinated alkyl group, a perfluorinated or partially fluorinated alkenyl group, an oxyalkylene group $CH_3-(O-(CH_2)_m)_n$ in which $2 \leq m < 5$ and $1 \leq n \leq 10$, or an aryl group comprising one or more fused or nonfused aromatic nuclei and optionally bearing a substituent.

**13.** Process according to Claim 1, **characterized in that** the group GP is a thermopolymerizable group, and the extrusion is performed at a temperature lower than the polymerization temperature.

**14.** Process according to Claim 1, **characterized in that** GP is:

- a thermopolymerizable group, and the prepolymer film obtained after extrusion is subjected to a heat treatment which consists in placing the film in an oven on its exit from the extruder, or
- a photocrosslinkable group, and the prepolymer film obtained after extrusion is subjected either to UV irradiation in the 200-400 nm range with an intensity of 5-150 $mW/cm^2$, or to an electron beam.

**15.** Process according to Claim 1, **characterized in that** the ionic groupings are introduced into the film obtained after extrusion and polymerization, by a process comprising the following steps:

• the polymerized film is swollen by an anhydrous solvent,
• said swollen film is contacted with a solution in an anhydrous solvent of a reagent which is a precursor of the ionic grouping, with stirring,
• the film is extracted from the solution and washed with pure water, dried under vacuum, then steeped in distilled water in order to preserve it.

**16.** Process according to Claim 1, wherein ionic groupings $-SO_3(1/p)M^{p+}$ are introduced into a dry film obtained by crosslinking a polysulfone prepolymer comprising terminal alkynyl groups GP and in which the reactive groups GR are composed of some of the groups GA, by a process comprising the following steps:

• swelling the dry film with an anhydrous solvent;
• preparing an anhydrous solution of trimethylsilyl chlorosulfonate or chlorosulfonic acid in the selected anhydrous solvent;
• contacting the swollen film obtained in step 1 with the solution prepared during step 2;

- washing the film with the pure solvent used in step 1;
- drying the sulfonated film under dynamic vacuum, at a temperature between 40 and 80°C;
- steeping the film in distilled water.

**17.** Use of a film obtained by a process as defined in one of Claims 1 to 16, which is composed of a crosslinked polymer comprising repeating units (GA, GR) bearing ionic groupings, and wherein the cation of the ionic groupings is a lithium ion, as an electrolyte of a lithium battery, of a supercapacitor or of an electrochromic device.

**18.** Use of a film obtained by a process as defined in one of Claims 1 to 16, which is composed of a crosslinked polymer comprising repeating units (GA, GR) bearing ionic groupings, and wherein the cation of the ionic groupings is selected from ammonium, imidazolium, pyrazolium, tetrazolium, pyridinium, and guanidinium ions, as a membrane for a fuel cell, as an ion exchange membrane or as an electrodialysis membrane.

Fig. 1

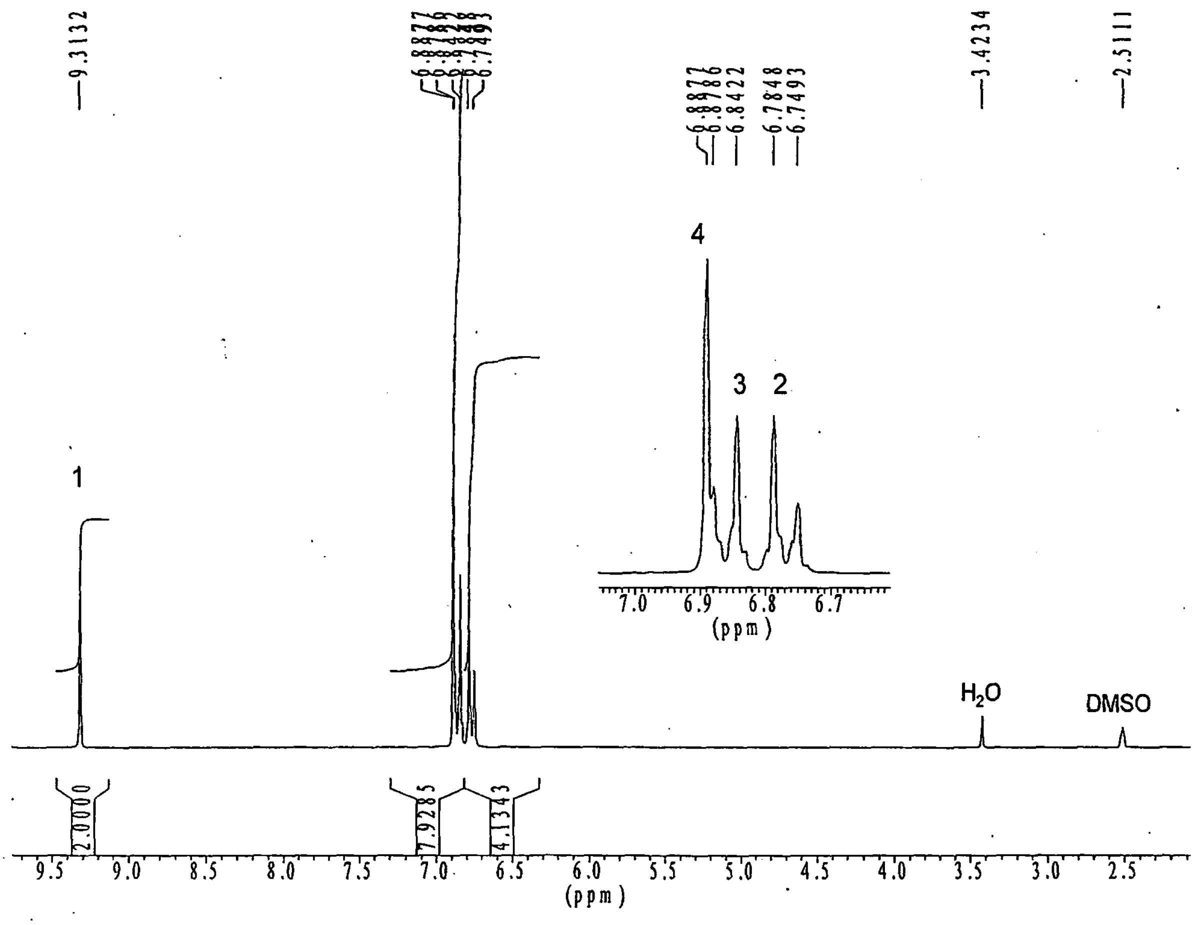
9.3132
6.8877
6.8786
6.8422
6.7848
6.7493
3.4234
2.5111
4
3 2
1
7.0 6.9 6.8 6.7
(ppm)
$H_2O$
DMSO
2.0000
7.9285
4.1343
9.5 9.0 8.5 8.0 7.5 7.0 6.5 6.0 5.5 5.0 4.5 4.0 3.5 3.0 2.5
(ppm)

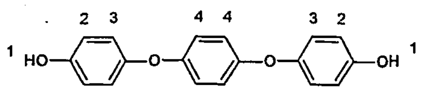

Fig. 2

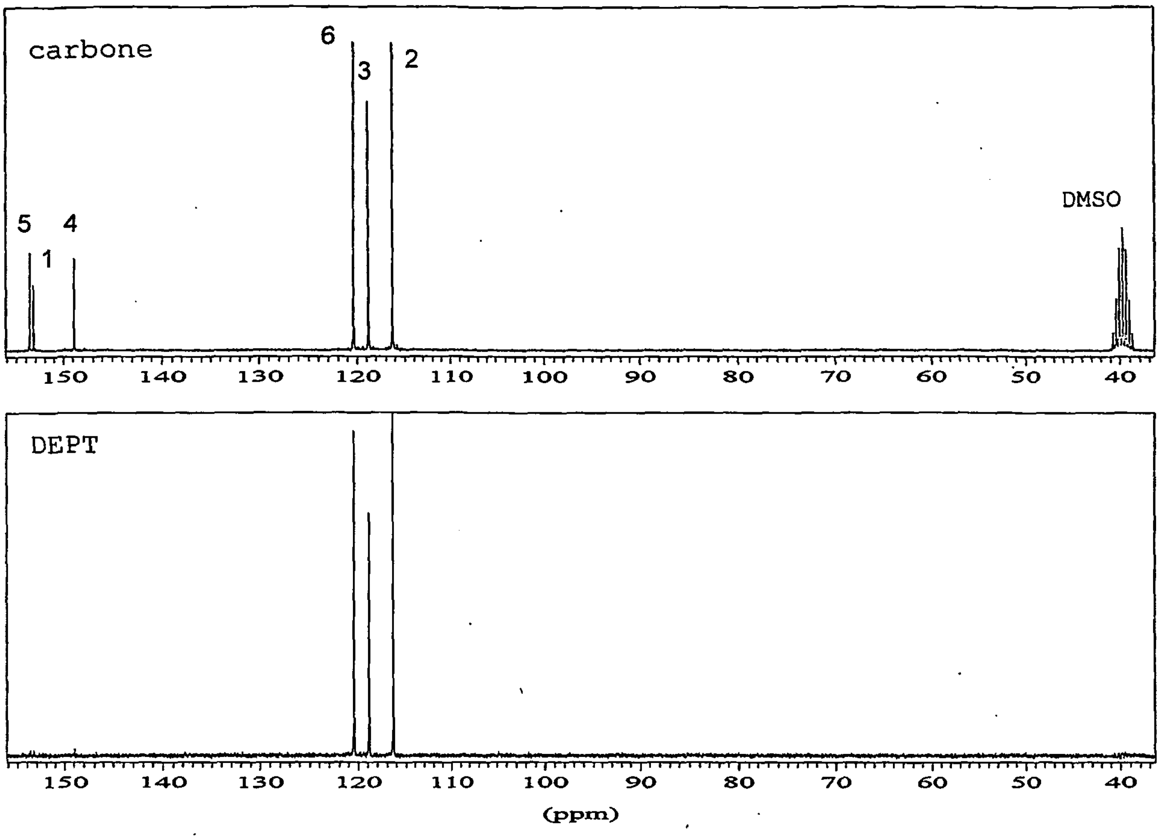
carbone
6
3
2
5
4
1
DMSO
150
140
130
120
110
100
90
80
70
60
50
40
DEPT
150
140
130
120
110
100
90
80
70
60
50
40
(ppm)

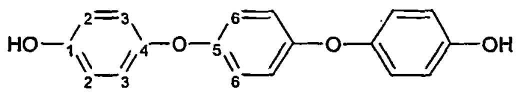

Fig. 3

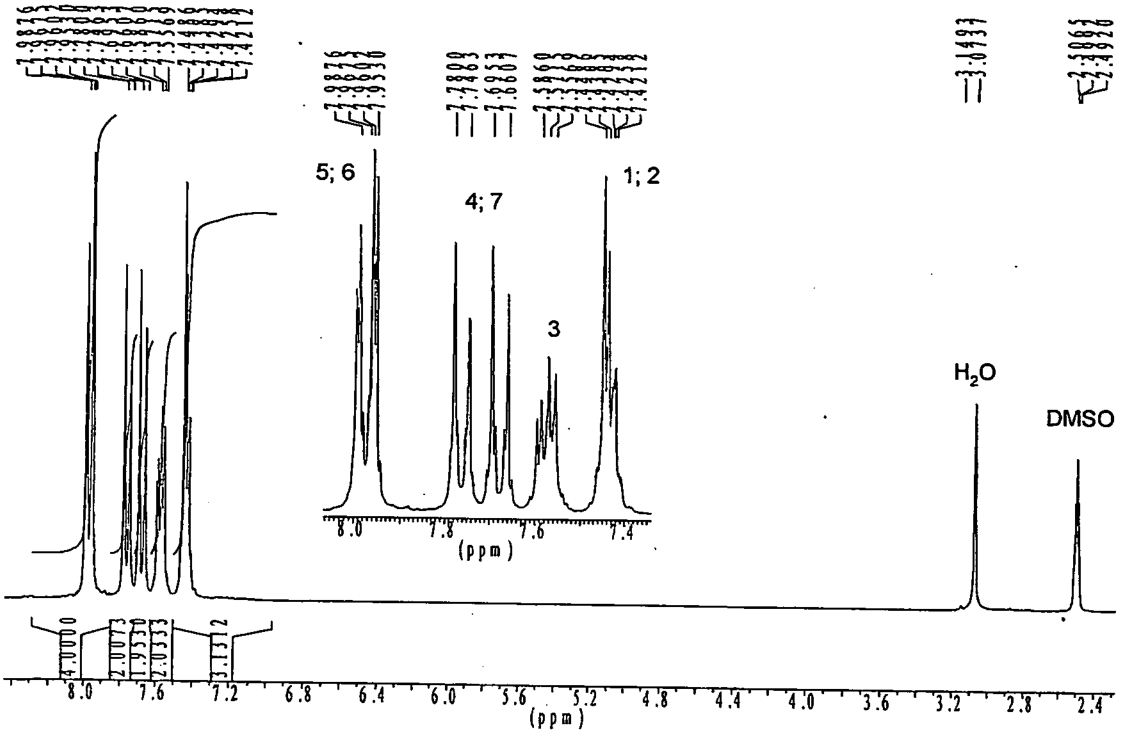
5; 6
4; 7
3
1; 2
H$_2$O
DMSO
(ppm)
8.0 7.6 7.2 6.8 6.4 6.0 5.6 5.2 4.8 4.4 4.0 3.6 3.2 2.8 2.4
(ppm)
8.0 7.8 7.6 7.4

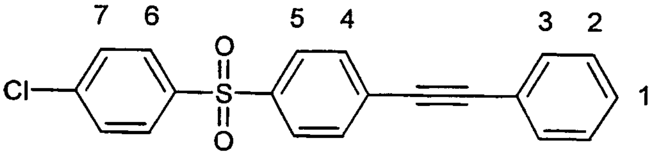

Fig. 4

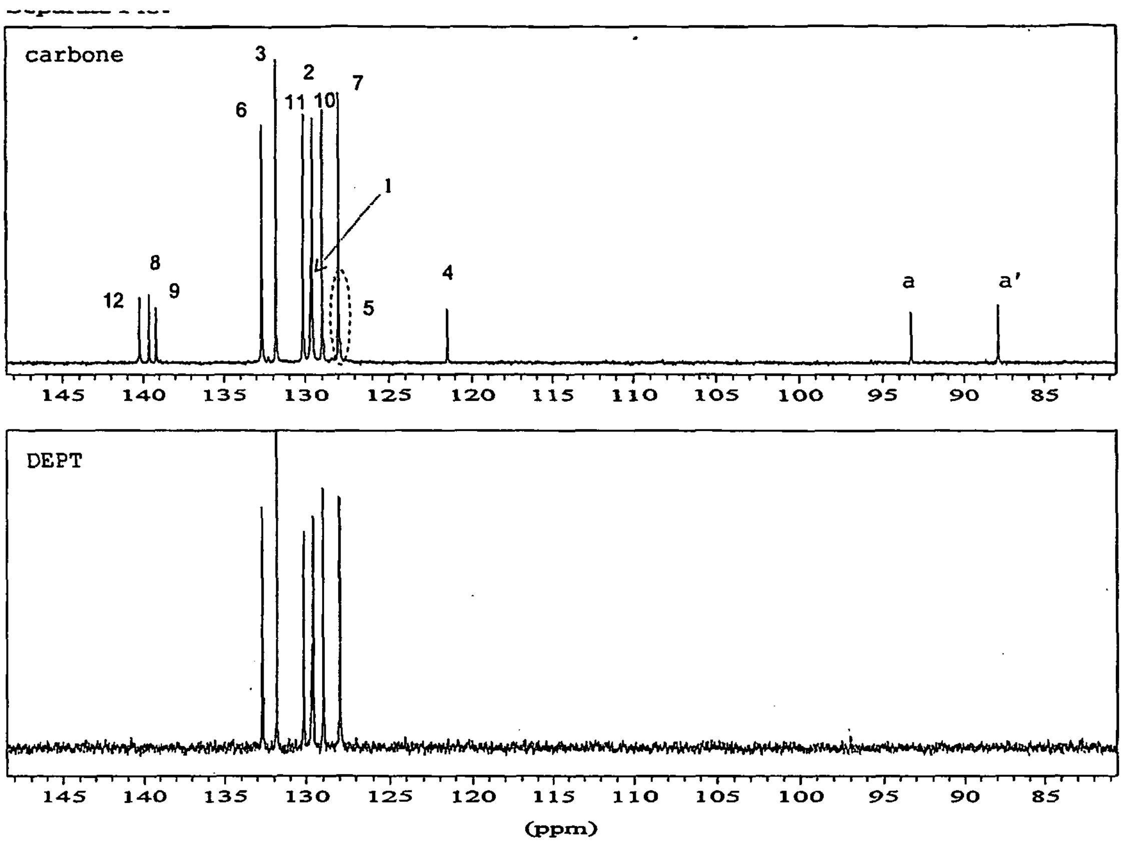
carbone
3
2
7
6
11 10
1
8
12
9
5
4
a
a'
145 140 135 130 125 120 115 110 105 100 95 90 85
DEPT
145 140 135 130 125 120 115 110 105 100 95 90 85
(ppm)

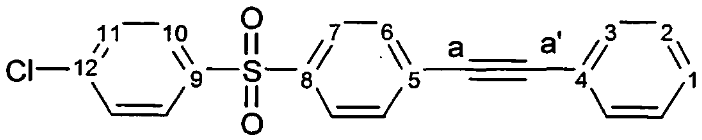

Fig. 5

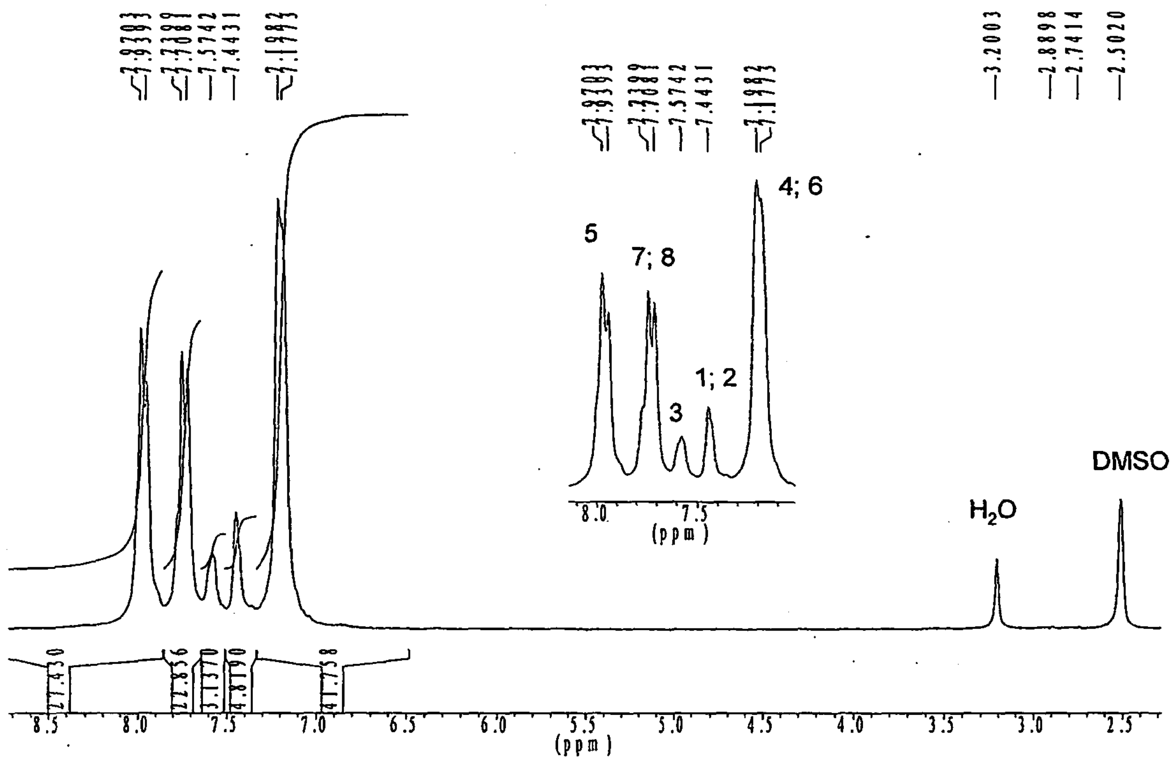
7.9703
7.9393
7.7389
7.7081
7.5742
7.4431
7.1983
7.1793
3.2003
2.8898
2.7414
2.5020
5
7; 8
4; 6
1; 2
3
8.0
7.5
(ppm)
$H_2O$
DMSO
27.430
22.656
3.1370
4.8190
41.758
8.5
8.0
7.5
7.0
6.5
6.0
5.5
5.0
4.5
4.0
3.5
3.0
2.5
(ppm)

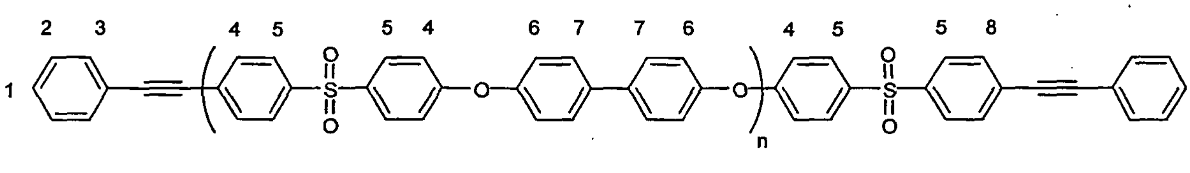

Fig. 6

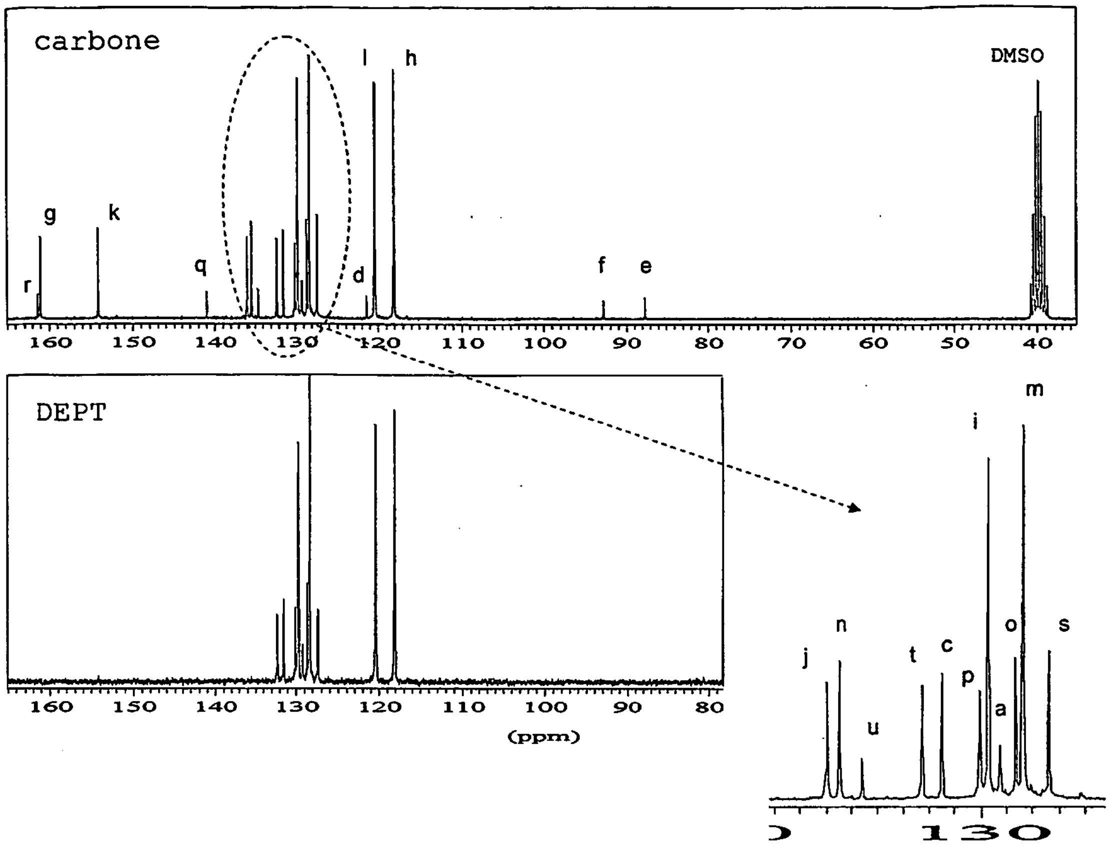
carbone
r
g
k
q
d
l
h
f
e
DMSO
160 150 140 130 120 110 100 90 80 70 60 50 40
DEPT
160 150 140 130 120 110 100 90 80
(ppm)
m
i
n
o
s
j
t
c
p
u
a
130

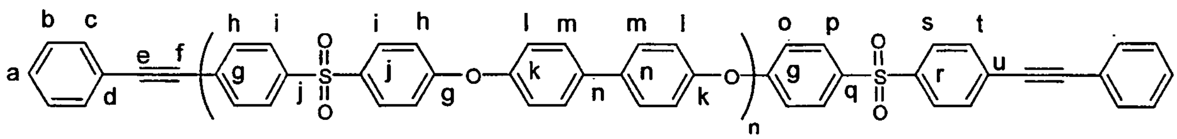

Fig. 7

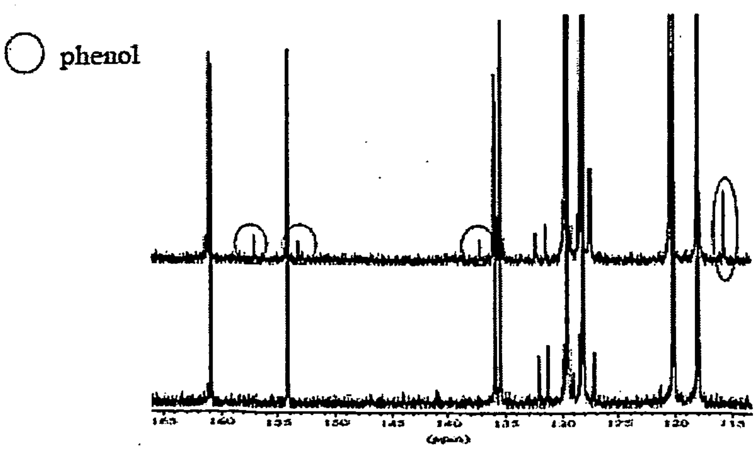
phenol

Fig. 8

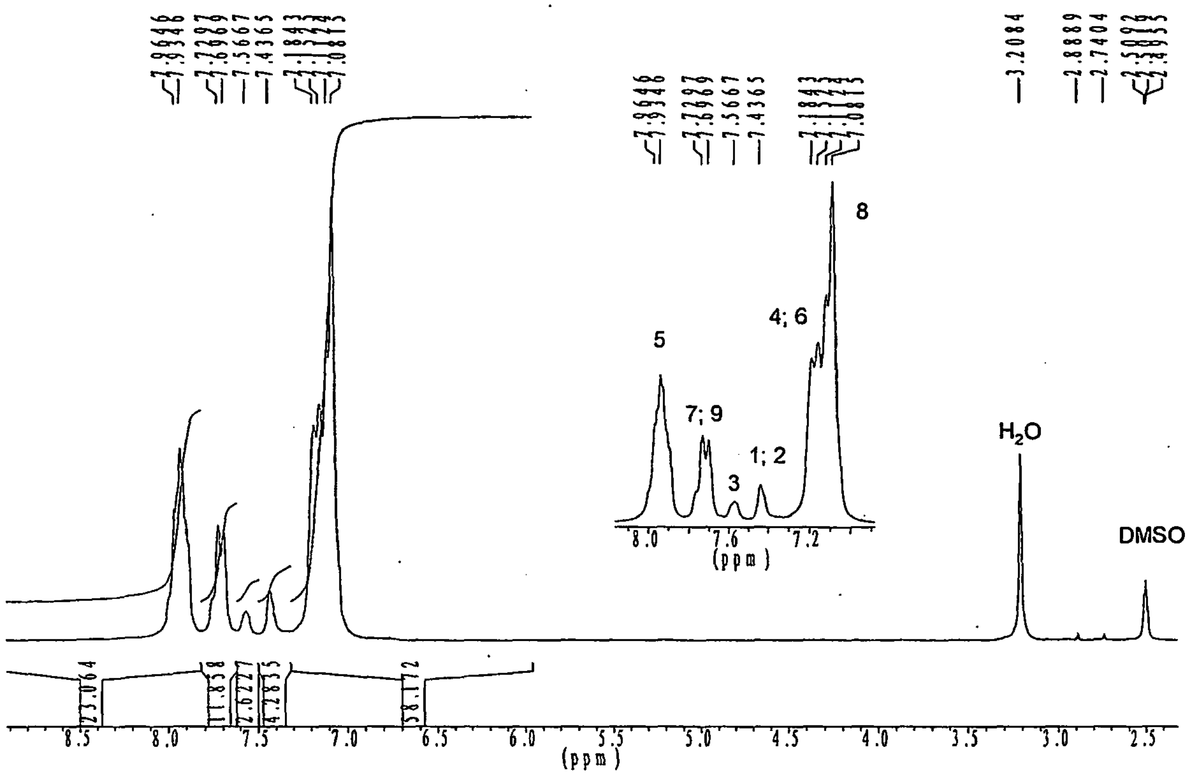


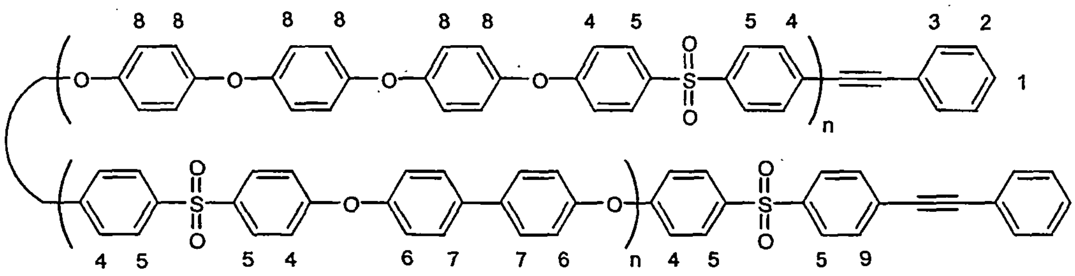

Fig. 9

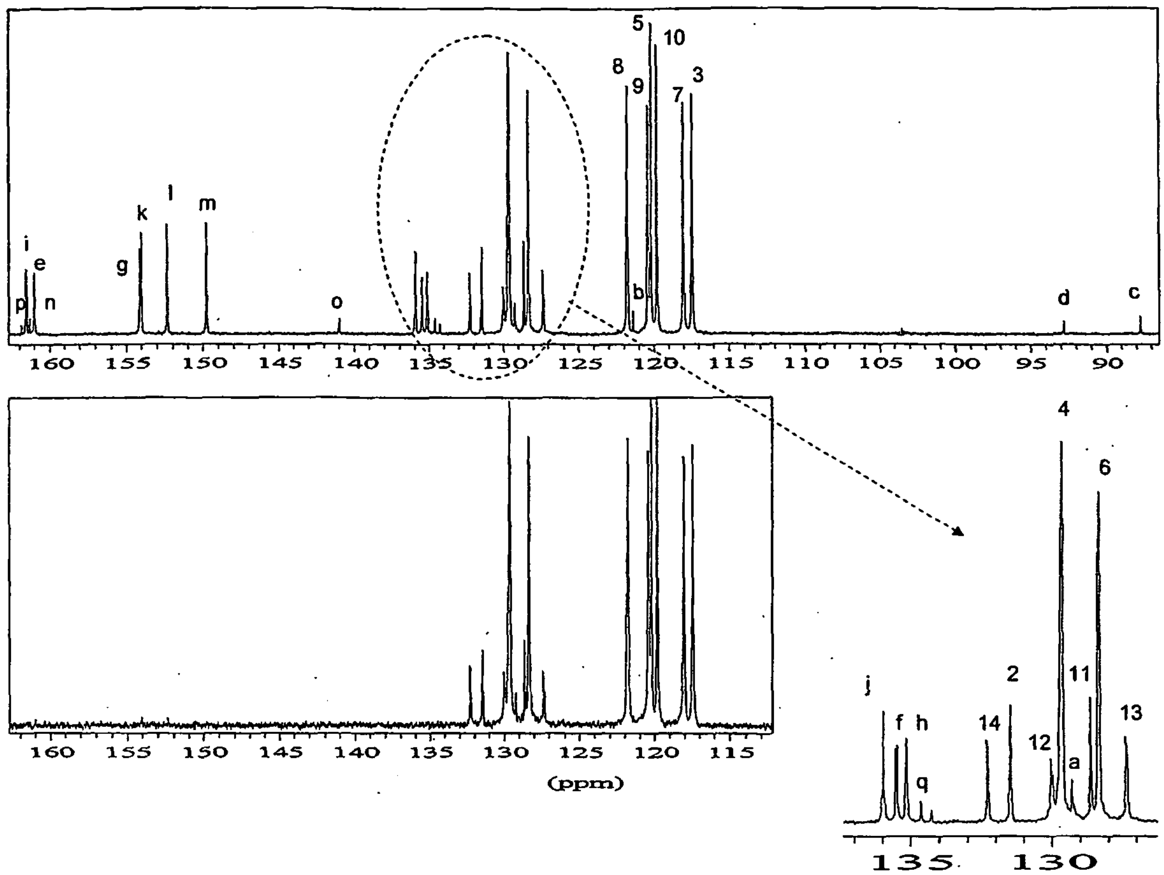
160 155 150 145 140 135 130 125 120 115 110 105 100 95 90
160 155 150 145 140 135 130 125 120 115
(ppm)
135 130

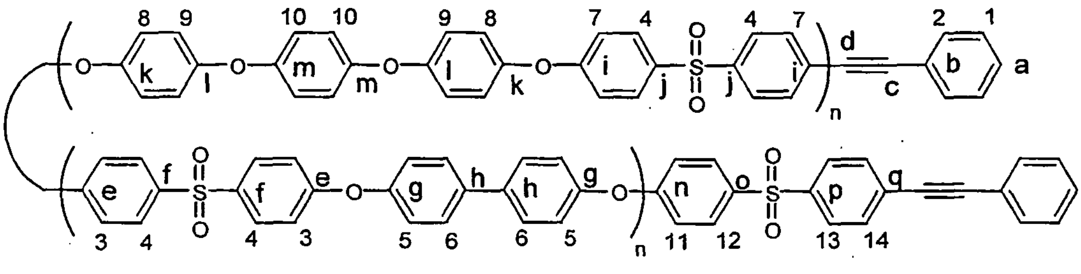

Fig. 10

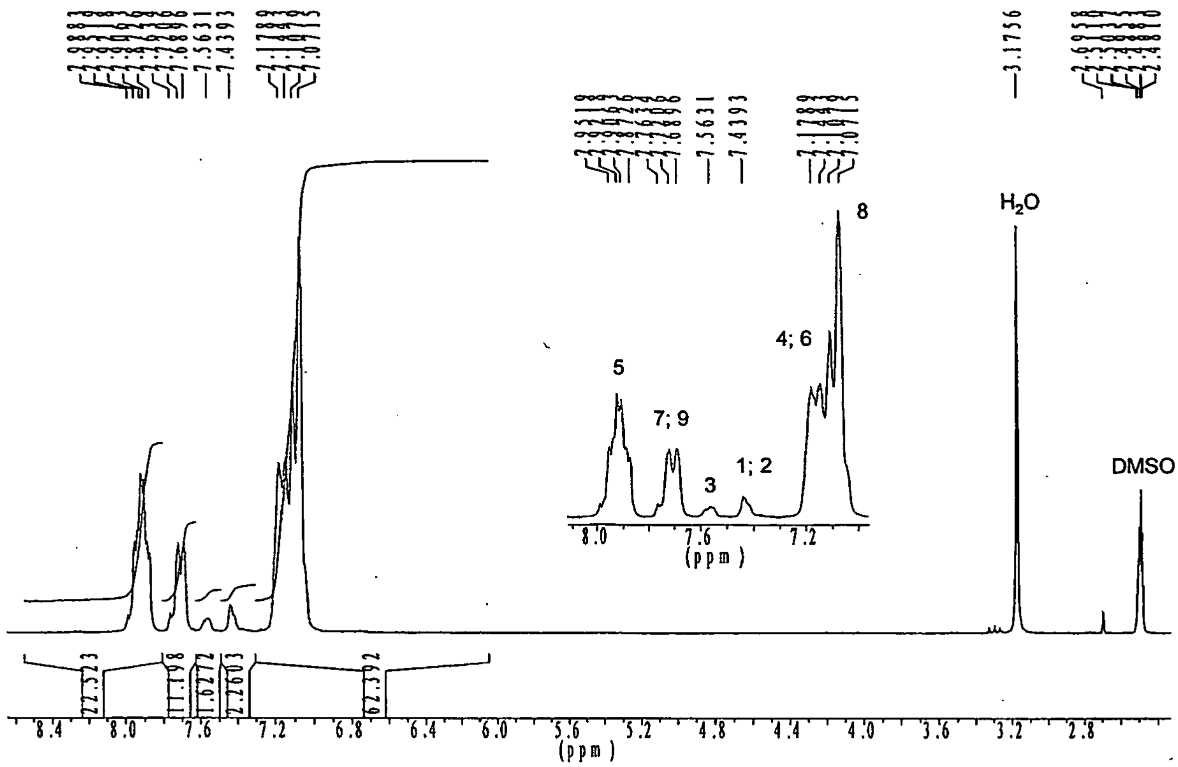


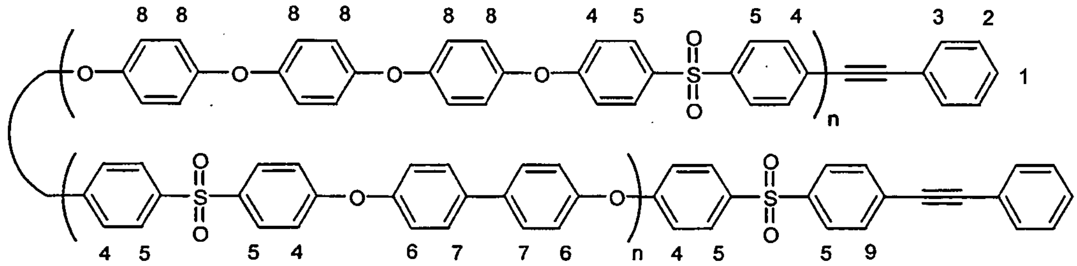

Fig. 11

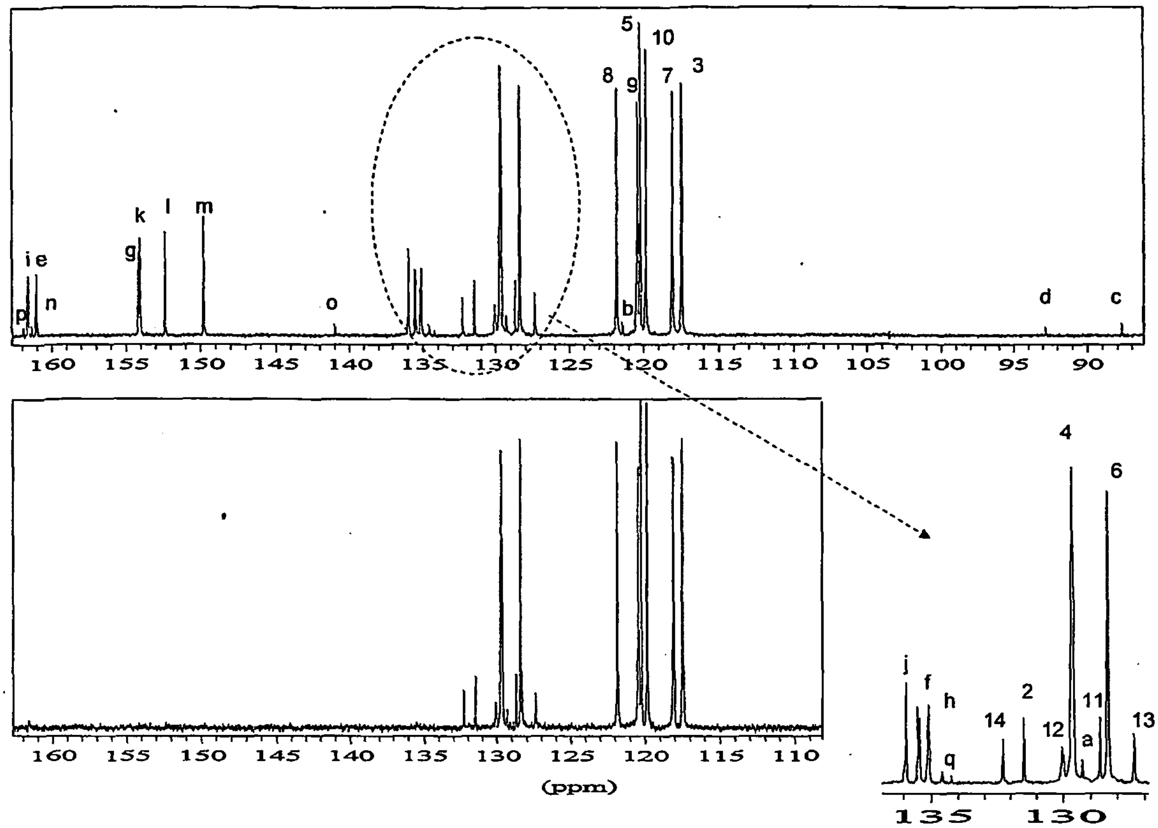
5
10
8
9
7
3
k
l
m
g
i e
n
o
p
b
d
c
160 155 150 145 140 135 130 125 120 115 110 105 100 95 90
160 155 150 145 140 135 130 125 120 115 110
(ppm)
4
6
j
f
h
q
14
2
12
11
a
13
135 130

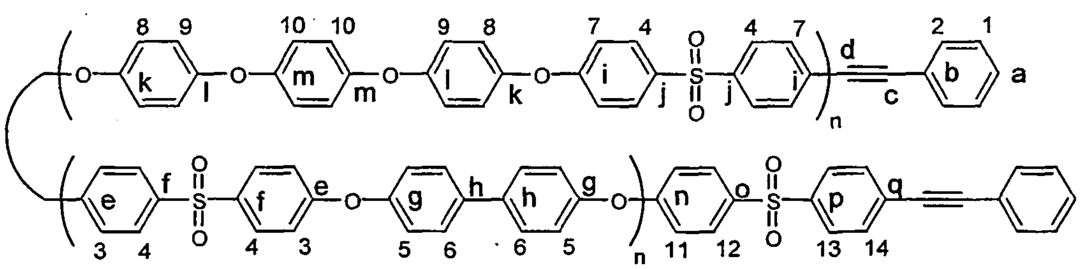

fig. 12

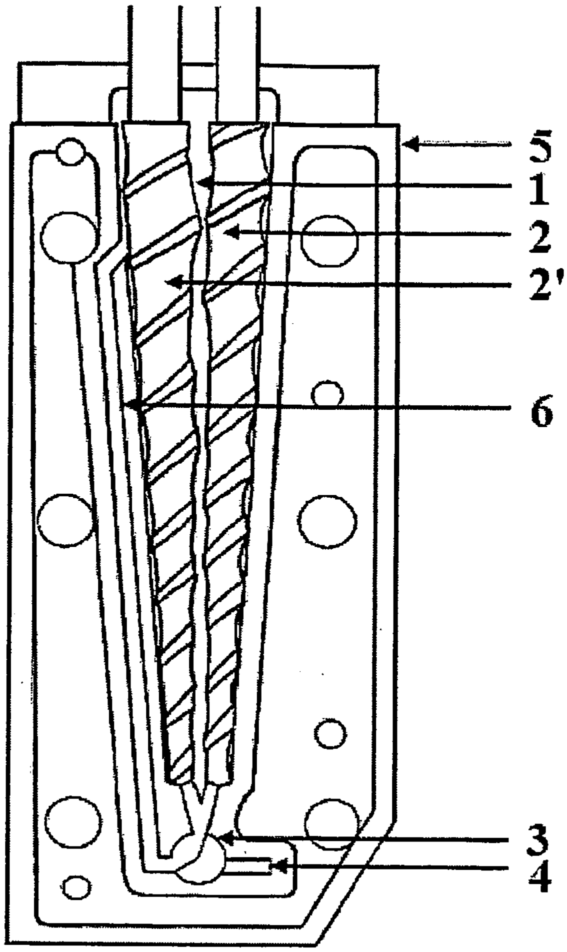

Fig. 13

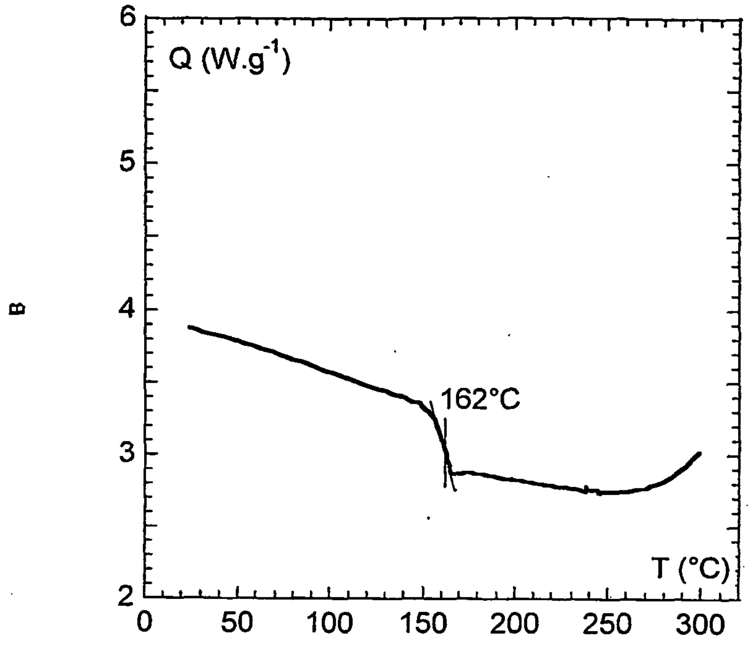
Q (W.g-1)
162°C
T (°C)
6
5
4
3
2
0
50
100
150
200
250
300
B

Fig. 14

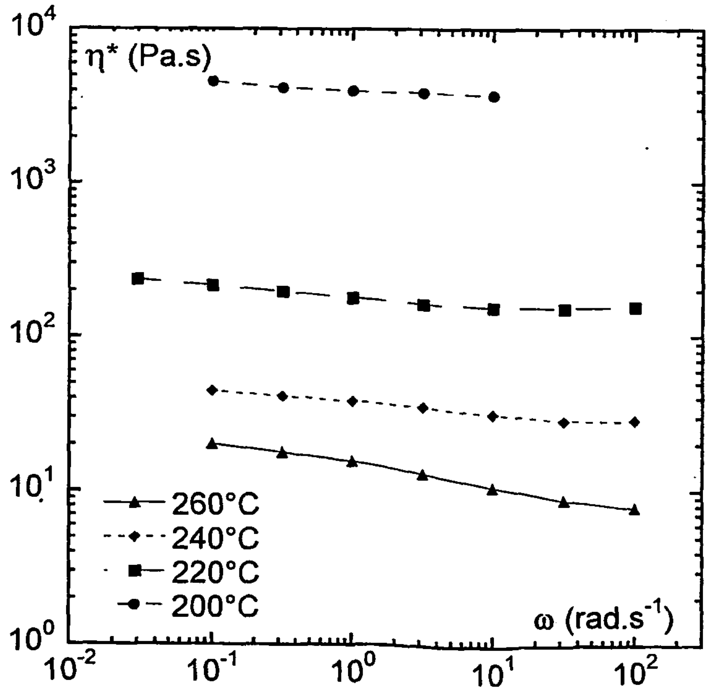
η* (Pa.s)
260°C
240°C
220°C
200°C
ω (rad.s-1)
10^4
10^3
10^2
10^1
10^0
10^-2
10^-1
10^0
10^1
10^2

Fig. 15

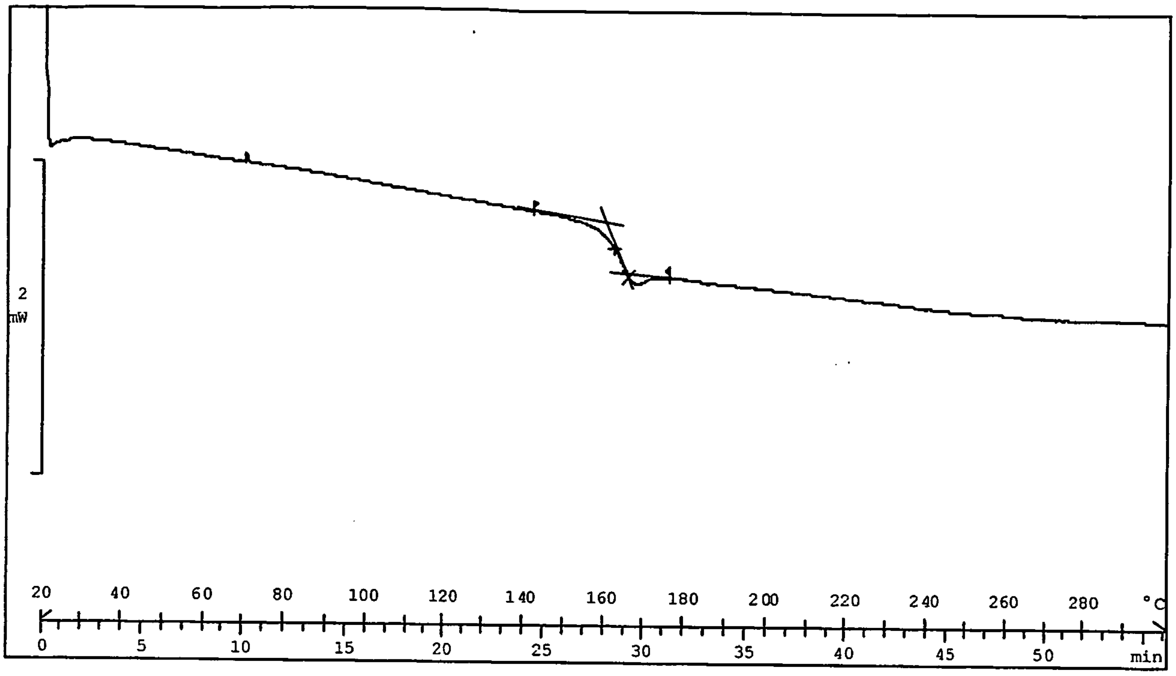
2
mW
20
40
60
80
100
120
140
160
180
200
220
240
260
280
°C
0
5
10
15
20
25
30
35
40
45
50
min

Fig. 16

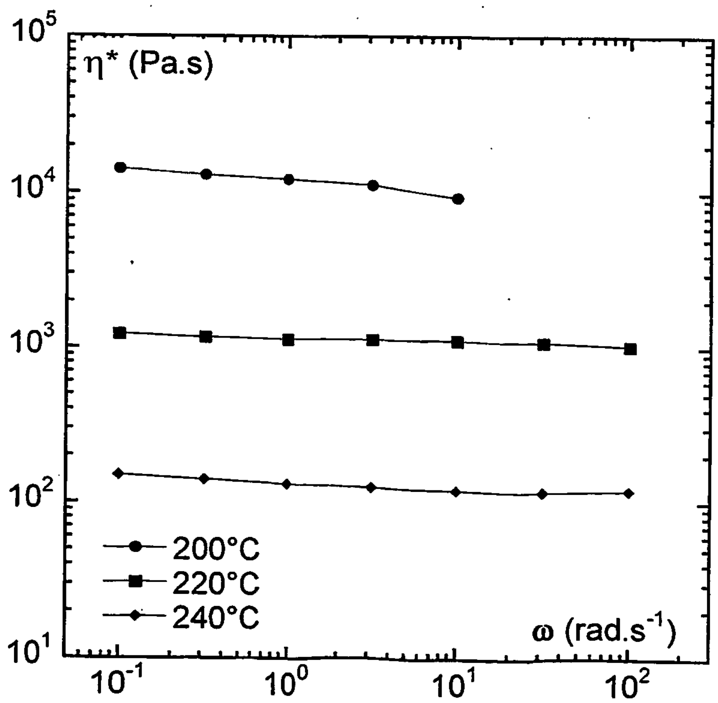
η* (Pa.s)
200°C
220°C
240°C
ω (rad.s-1)

Fig. 17

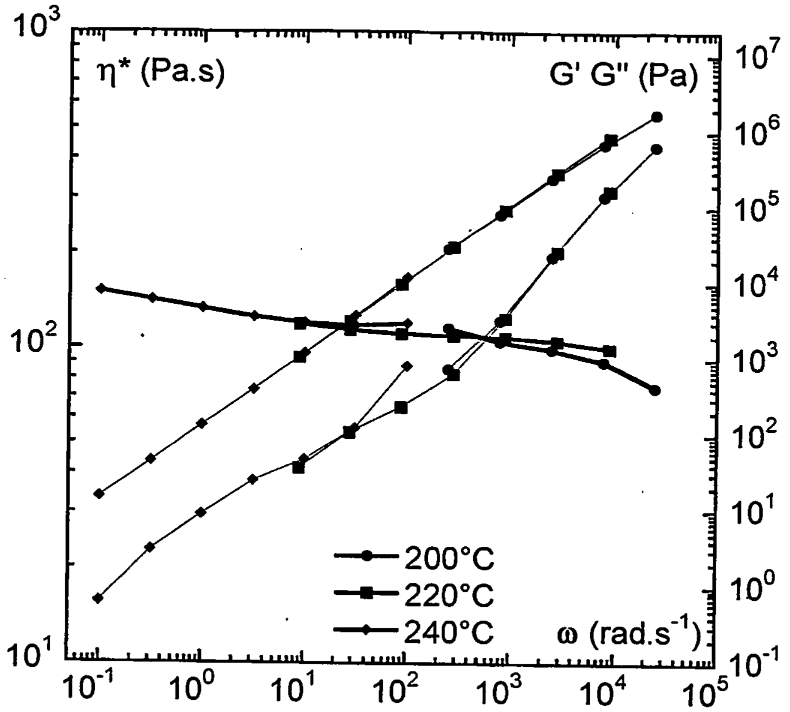
η* (Pa.s)
G' G" (Pa)
200°C
220°C
240°C
ω (rad.s⁻¹)

Fig. 18

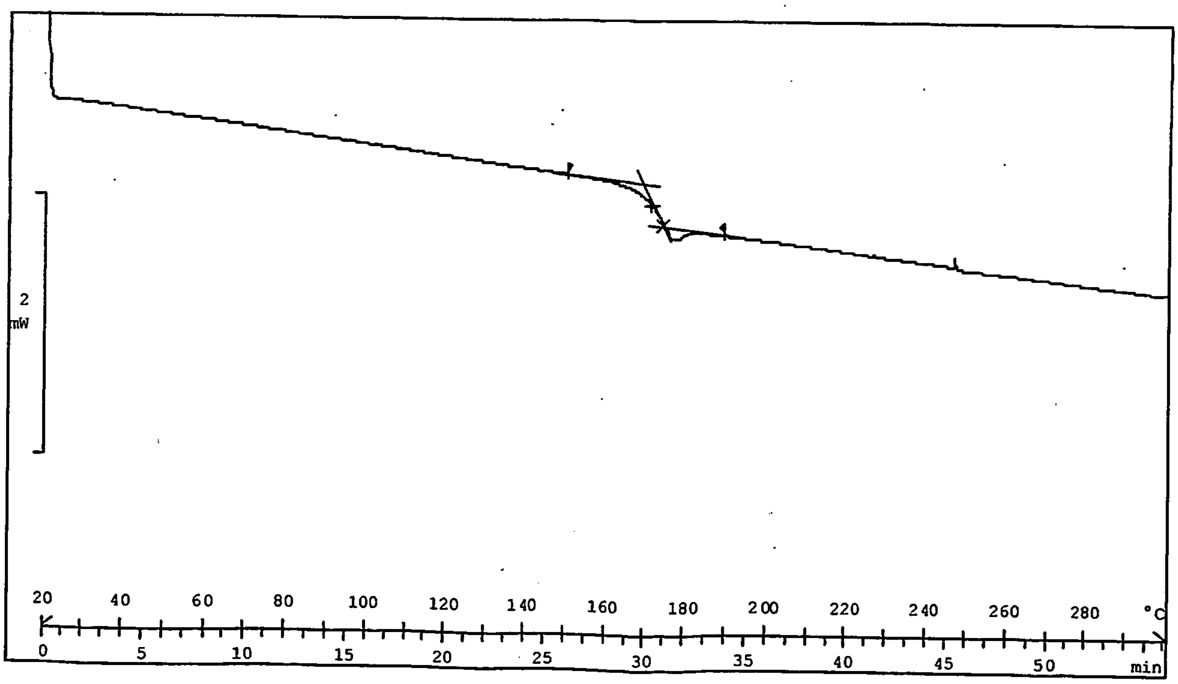
2
mW
20 40 60 80 100 120 140 160 180 200 220 240 260 280 °C
0 5 10 15 20 25 30 35 40 45 50 min

Fig. 19

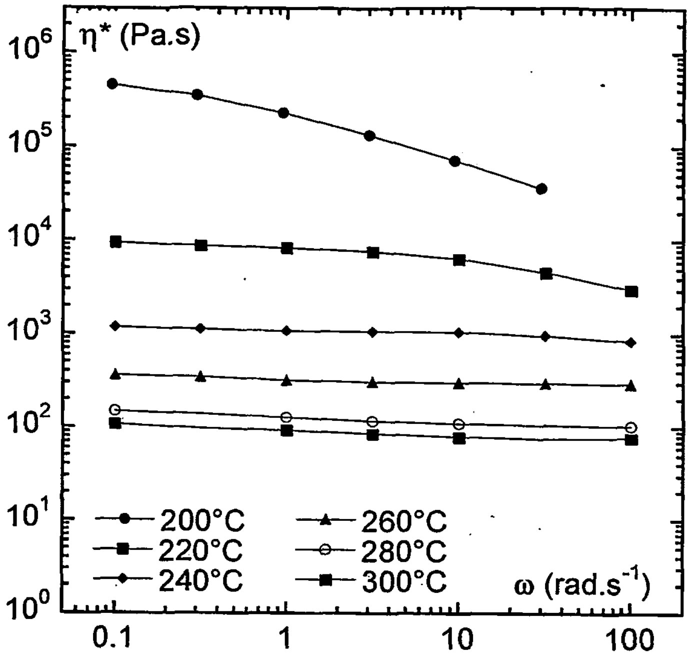
η* (Pa.s)
10^6
10^5
10^4
10^3
10^2
10^1
10^0
200°C
220°C
240°C
260°C
280°C
300°C
ω (rad.s^-1)
0.1
1
10
100

Fig. 20

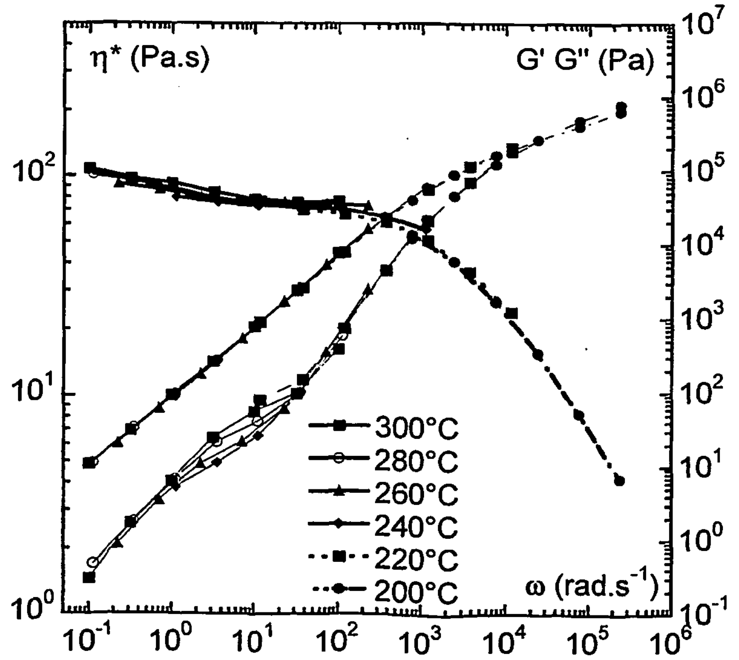
η* (Pa.s)
G' G" (Pa)
10^2
10^1
10^0
10^7
10^6
10^5
10^4
10^3
10^2
10^1
10^0
10^-1
300°C
280°C
260°C
240°C
220°C
200°C
ω (rad.s^-1)
10^-1
10^0
10^1
10^2
10^3
10^4
10^5
10^6